Europäisches Patentamt

European Patent Office

Office européen des brevets

(19)

(11) Publication number: **0 410 452 A2**

## EUROPEAN PATENT APPLICATION

(12)

(21) Application number: 90114367.7

(51) Int. Cl.⁵: **G06F 15/20**

(22) Date of filing: 26.07.90

(30) Priority: 28.07.89 JP 195652/89
28.07.89 JP 195660/89
28.07.89 JP 88795/89 U
28.07.89 JP 88798/89 U

(43) Date of publication of application:
**30.01.91 Bulletin 91/05**

(84) Designated Contracting States:
**DE FR GB**

(72) Inventor: **Sato, Takashi, c/o Pat. Dep., Hamura R & D Centerter**
**Casio Computer Co., Ltd., 3-2-1, Sakae-cho**
**Hamura-machi Nishitama-gun, Tokyo**
**190-11(JP)**
Inventor: **Yoshida, Junichi, c/o Pat. Dep.,**
**Hamura R & D Ctr.tr.**
**Casio Computer Co., Ltd., 3-2-1, Sakae-cho**
**Hamura-machi Nishitama-gun, Tokyo**
**190-11(JP)**

(71) Applicant: **CASIO COMPUTER COMPANY LIMITED**
**6-1, 2-chome, Nishi-Shinjuku**
**Shinjuku-ku Tokyo(JP)**

(74) Representative: **Patentanwälte Grünecker, Kinkeldey, Stockmair & Partnerner**
**Maximilianstrasse 58**
**D-8000 München 22(DE)**

(54) **Data totaling apparatus.**

(57) A data totaling apparatus processes table data and the like. Items are set, and attribute data are designated in the respective items. When data are input to a certain item, processing such an arithmetic operation, sorting, totaling, display control, or input control is performed in accordance with attribute data set in the item.

EP 0 410 452 A2

| ITEM | | A | B | C | D | E | F | G |
|---|---|---|---|---|---|---|---|---|
| ITEM DATA STORAGE AREA | ITEM NAME | SECTION | AGENT NAME | DATE | SALES OF ARTICLES A | SALES OF ARTICLES B | SECTION SALES RATIO | TOTAL SALES RATIO |
| | ATTRIBUTE | CHARACTER-SORT-TOTALING | CHARACTER-SORT-TOTALING | CHARACTER-SORT | FORMULA-TOTALING | FORMULA-TOTALING | (D+E)/(TOTAL(TOTAL (D)) +TOTAL(TOTAL(E))) | (D+E)/(TOTAL(TOTAL(TOTAL(D))+ (TOTAL(TOTAL(TOTAL(E)))) |
| TABLE DATA STORAGE AREA | FIRST PAGE | FIRST SECTION | A COMPANY | 89.1 | 100 | 90 | 0.28 | 0.14 |
| | SECOND PAGE | FIRST SECTION | A COMPANY | 89.2 | 150 | 40 | 0.28 | 0.14 |
| | THIRD PAGE | FIRST SECTION | A COMPANY | 89.3 | 80 | 60 | 0.20 | 0.10 |
| | TOTAL DATA PAGE | FIRST SECTION | A COMPANY | ----- | 330 | 190 | — | — |
| | FOURTH PAGE | FIRST SECTION | B COMPANY | 89.1 | 50 | 45 | 0.14 | 0.07 |
| | FIFTH PAGE | FIRST SECTION | B COMPANY | 89.2 | 30 | 55 | 0.12 | 0.06 |
| | TOTAL DATA PAGE | FIRST SECTION | B COMPANY | — | 80 | 90 | — | — |
| | TOTAL DATA PAGE | FIRST SECTION | — | — | 410 | 280 | — | — |
| | SIXTH PAGE | SECOND SECTION | C ELECTRIC COMPANY | 89.1 | 300 | 110 | 0.59 | 0.30 |
| | SEVENTH PAGE | SECOND SECTION | C ELECTRIC COMPANY | 89.3 | 160 | 120 | 0.41 | 0.20 |
| | TOTAL DATA PAGE | SECOND SECTION | C ELECTRIC COMPANY | ---- | 460 | 230 | — | — |
| | TOTAL DATA PAGE | SECOND SECTION | — | — | 460 | 230 | — | — |
| | GRAND TOTAL DATA PAGE | — | — | — | 870 | 510 | — | — |

**FIG. 4**

# DATA TOTALING APPARATUS

The present invention relates to a data totaling apparatus for performing totaling processing of input numerical data.

The present invention also relates to an apparatus and a method for worksheet processing.

Various types of apparatus and software for, example, personal computers and office computers are capable of processing table data and table calculations, and/or worksheet processing.

In order to improve their operability and increase the data processing speed, the above-mentioned apparatuses and software have been the subject of various improvements in relation to the method of designating attributes to input data, the method of processing input data, and the like.

However, even with such improvements, the user of such apparatuses may still feel the operation thereof to be somewhat cumbersome, especially in the case where he/she performs the operation for the setting of various data for desired table calculations or a worksheet.

To be specific, for example, the user must perform the setting of desired processing (for example, totaling input data and the like) in accordance with the particular data processing procedure by which table calculations or worksheet processing are performed by the apparatus in question. Thus, in many such setting operations, the format of the table or worksheet employed by the user must be altered so as to conform to the data processing procedure of the apparatus.

The present invention has been developed in light of the aforementioned drawbacks of the conventional apparatuses, and has as its object to provide a data processing apparatus which is designed to have improved operability by minimizing portions of the data processing procedures of the apparatus which must be considered by the user.

In order to achieve the above object, there is provided a data processing apparatus comprising item setting means for setting a plurality of items, attribution data designating means for designating attribution data with respect to the items set by the item setting means, first storage means for storing the attribution data designated by the attribution data designating means, data input means for inputting data with respect to the items set by the item setting means, processing means for processing the data input by the data input means, in response to the attribution data stored in the first storage means, so as to produce a set of data with respect to the whole items set by the item setting means, and second storage means for storing a plurality of sets of data produced by the processing means.

By virtue of with the above-described arrangement of the present invention, the user wishing to perform desired table calculation processing can set various necessary data on the basis of a personally preferred table format. Thus, the present invention has a number of advantages over the prior art; in particular, improved operability.

This invention can be more fully understood from the following detailed description when taken in conjunction with the accompanying drawings, in which:

Fig. 1 is a block diagram showing the circuit arrangement of a data totaling apparatus according to an embodiment of the present invention;

Fig. 2 is a view showing the storage format of a table data memory of the data totaling apparatus shown in Fig. 1;

Figs. 3A to 3P are views respectively showing key input operations and corresponding display states in the case of the data totaling apparatus shown in Fig. 1;

Fig. 4 is a view showing a table to be input to the data totaling apparatus shown in Fig. 1;

Figs. 5A to 5D are views respectively showing results obtained by performing totaling and sort processing of table data input to the data totaling apparatus shown in Fig. 1;

Figs. 6A and 6B show a flow chart setting out the input processing steps performed by the data totaling apparatus shown in Fig. 1;

Fig. 7 is a flow chart setting out in detail the procedure performed in the arithmetic operation 1 included in the flow chart of Figs. 6A and 6B;

Figs. 8A and 8B show a flow chart setting out in detail the procedure followed in the total data page formation processing step included in the flow chart of Figs. 6A and 6B;

Fig. 9 is a flow chart setting out in detail the procedure followed in the totaling processing step included in the flow chart of Figs. 8A and 8B;

Fig. 10 is a flow chart setting out in detail the procedure performed in the arithmetic operation 2 included in the flow chart of Figs. 6A and 6B;

Fig. 11 is a flow chart setting out in detail the procedure followed in the total data page retrieval processing step included in the flow charts of Figs. 7 and 10, and which is performed to retrieve the table data address of an arithmetic expression variable item;

Figs. 12A and 12B show a flow chart explaining the registration processing of input data in the data totaling apparatus shown in Fig. 1;

Figs. 13A and 13B show a flow chart explaining the edition processing of registered data in the data totaling apparatus shown in Fig. 1;

Fig. 14 is a view showing the state of table data after edition processing of the table data in Fig. 4 has been performed;

Figs. 15A to 15V are views respectively showing other key input operations and corresponding display states in the case of the data totaling apparatus shown in Fig. 1;

Fig. 16 is a view showing another table input to the data totaling apparatus in Fig. 1;

Figs. 17A to 17D are views respectively showing states of data obtained by performing sorting and summarizing of data input to the data totaling apparatus shown in Fig. 1;

Fig. 18 is a flow chart setting out in detail the procedure followed in the display processing step included in the flow chart of Figs. 6A and 6B;

Figs. 19A to 19F are views respectively showing key operations and corresponding display states with respect to the search processing performed in the case of the data totaling apparatus shown in Fig. 1; and

Fig. 20 is a flow chart showing the search processing performed in the case of the data totaling apparatus shown in Fig. 1.

An embodiment of the present invention will now be described below, with reference to the accompanying drawings.

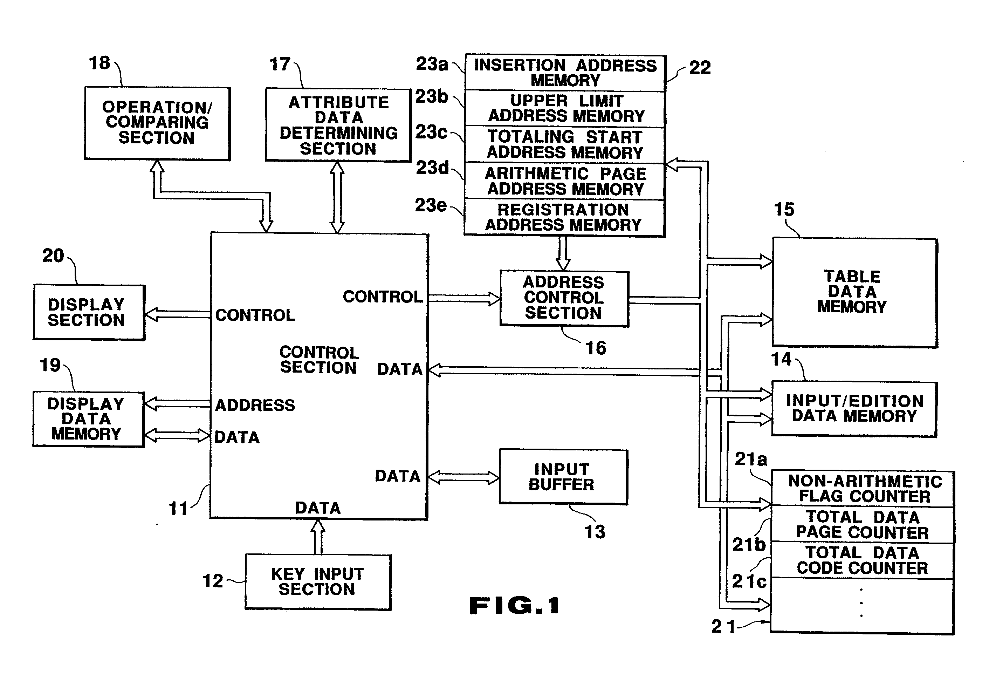

Fig. 1 is a block diagram showing the overall schematic arrangement of the apparatus of the present invention. Referring to Fig. 1, reference numeral 11 denotes a control section to which the following components are connected: a key input section 12; an input buffer 13; an input/edition data memory 14; a table data memory 15; an address control section 16; an operation data memory 21; an attribute data determining section 17; an operating/comparing section 18; a display data memory 19; and a display section 20. In addition, an address register 22 is connected to the address control section 16.

The key input section 12 comprises various function keys, e.g., a ten-key pad, character keys (English letter keys, kana (Japanese syllabary) keys, and the like), a "table mode" key, an "input mode" key, an "execute" key, a "next item/register" key, a "formula set" key, a "search" key, a "transfer" key, four fundamental arithmetic rule keys, a mark key, cursor keys, an "insert" key, a "move" key, and a "delete" key. Data is input from the key input section 12 to the control section 11. The control section 11 then supplies the data to the input buffer 13 and the display data memory 19. The data held by the display data memory 19 is displayed on the display section 20. The display section 20 is constituted by a liquid crystal display unit, and can display alphanumeric data on a display screen of, for example, 12 digits × 3 rows.

The address control section 16 performs address control of the input/edition data memory 14, the operation data memory 21, and the table data memory 15 on the basis of address data stored in the address register 22 in response to a command from the control section 11. The address register 22 comprises an insertion address memory 23a, an upper limit address memory 23b, a totaling start address memory 23c, an operation page address memory 23d, and a registration address memory 23e. The insertion address memory 23a stores an insertion address used for a sort operation, and the upper limit address memory 23b stores an upper limit address of data to be sorted when the data a plurality of pages. The input/edition data memory 14 is designed to store one-page input/edition data, and when it completes data edition corresponding to one page, it outputs the stored data to the table data memory 15.

The operating/comparing section 18 performs an arithmetic operation based on a preset formula or compares data in sorting in response to a command from the control section 11, and outputs the comparison result thereto. Operation data for the arithmetic operation is stored in the operation data memory 21. The operation data memory 21 includes a non-operation flag counter 21a, a total data page counter 21b, a total data code counter 21c, and the like.

The attribute data determining section 17 determines the attributes of data to be input to each item of the table, and outputs the determination result to the control section 11. The attribute data include "character", "formula", "sort", "mark", "remarks", and "totaling", which have the following meanings:

"character"...indicates that data to be input to a corresponding item is character data.

"formula"...indicates that data to be input to a corresponding item is numeric data. In "formula", an arithmetic expression and numeric values can be set.

"sort"...indicates that data input to a corresponding item is to be sorted. A "sort" target item located on the left side is subjected to sort processing with preference to a "sort" target item located on the right side.

"mark"...is an output inhibition command for inhibiting output of an item name set in a corresponding item in the display mode.

"remarks"...is an output inhibition command for inhibiting output of an item name set in a corresponding item and inhibiting data input to the corresponding item in the display mode.

"totaling"...indicates totaling of data in items in which both "totaling" and "formula" are set in accordance with items in which both "totaling" and "character" are set.

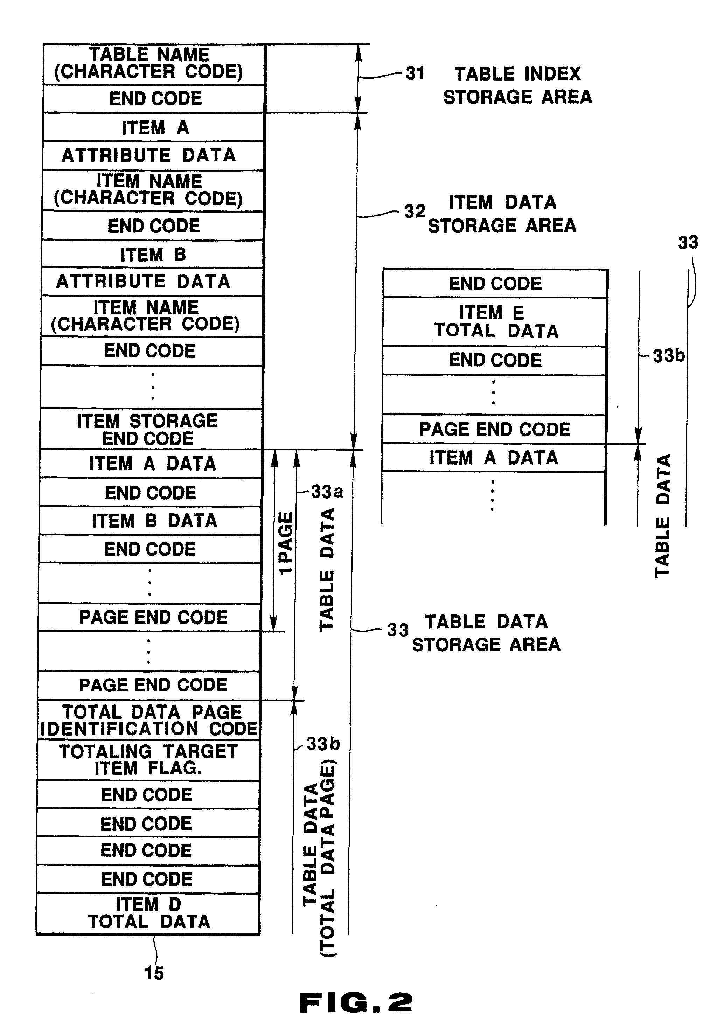

Fig. 2 shows a storage format of the table data memory 15. The table data memory 15 is roughly divided into a table index storage area 31, an item data storage area 32, and a table data storage area 33.

The table index storage area 31 stores a table name (character code). An end code is written between the table index storage area 31 and the adjacent item data storage area 32.

The item data storage area 32 stores items A, B, and attribute data and an item name (character code) for each item. An end code is written in the end portion of each item.

The table data storage area 33 stores data constituting one table in units of pages, and is constituted by an input data memory 33a for storing input data corresponding to each page, and a total data memory 33b for storing total data. The input data memory 33a stores the data of the respective items A, B, .... End codes are respectively written between the items, and a page end code is written in the end portion of each page. The total data memory 33b stores a total data page identification code, a totaling target item flag, and total data for each item. End codes are respectively written between the items, and a page end code is written in the end portion of each page.

Although Fig. 2 shows only one table, the table data memory 15 does have a memory capacity large enough to store a plurality of tables.

A table formation operation in the case of the above-described embodiment will now be described below.

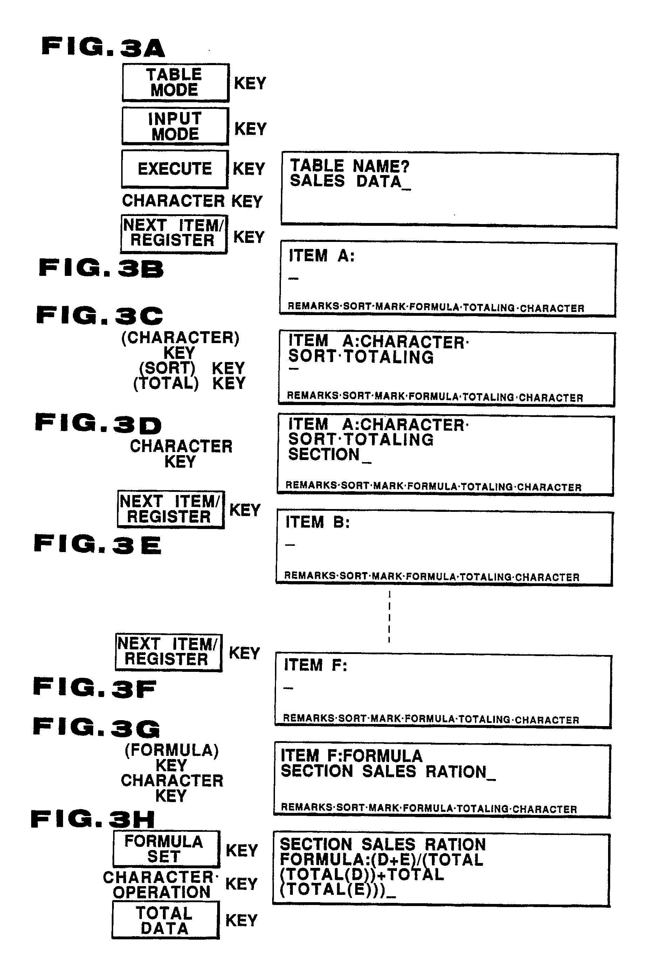

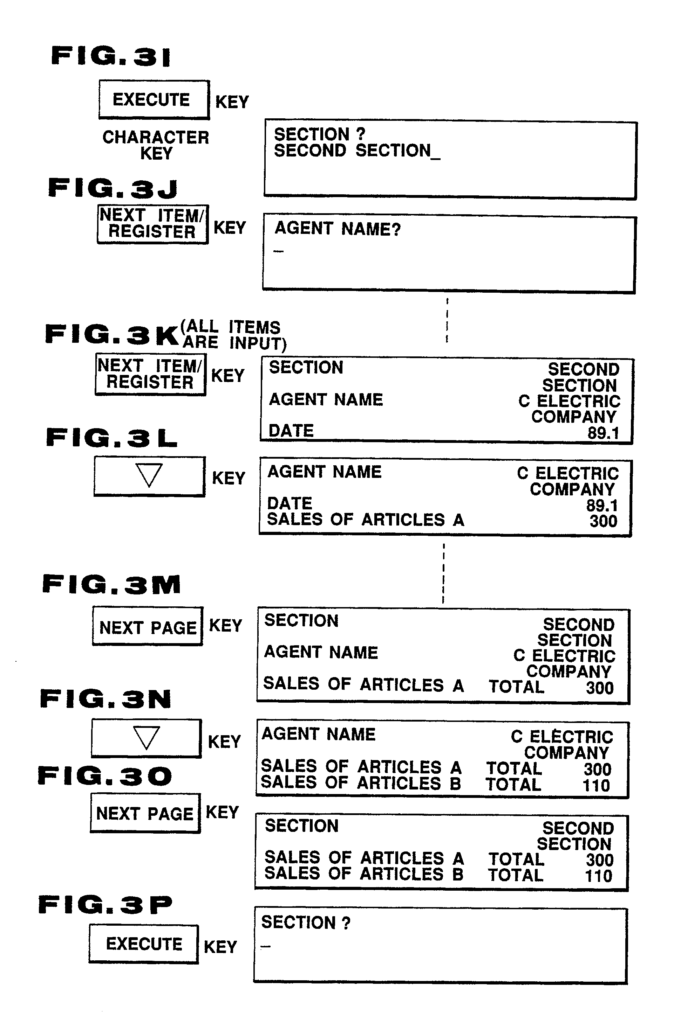

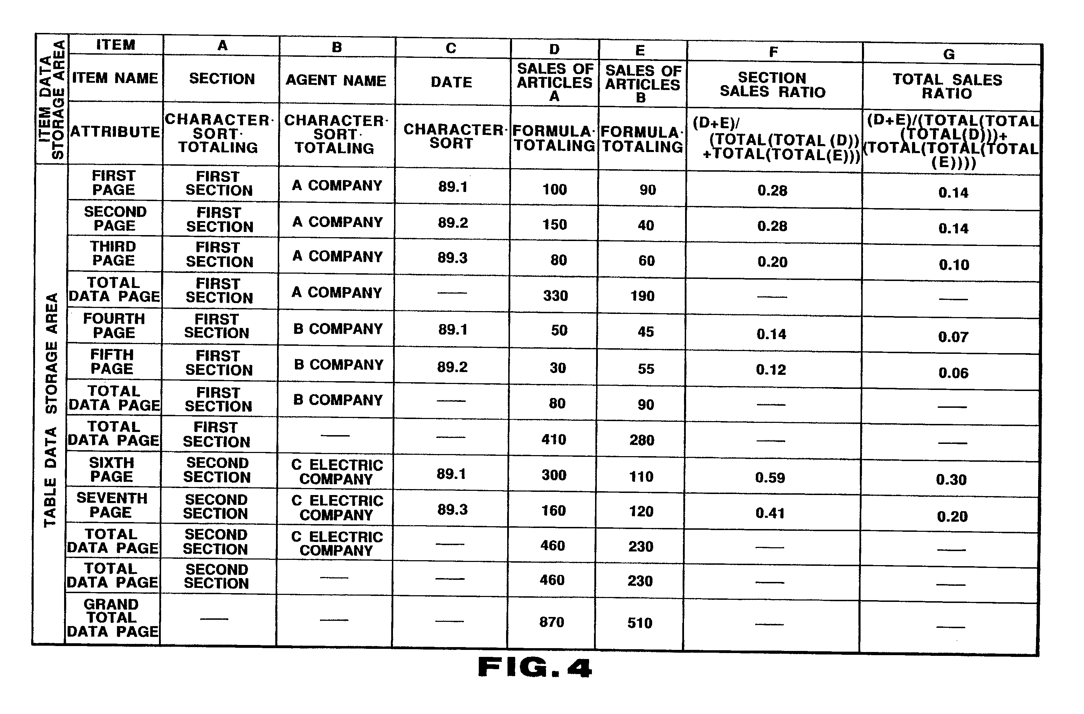

Figs. 3A to 3P respectively show key operations and corresponding display states in table formation. Fig. 4 shows a table formed by the above operations, this table representing the actual sales data of first and second sections of a company. In items A to G of this table, "section in charge", "agent name", "date", "sales of articles A", "sales of articles B", "section sales ratio", and "total sales ratio" are respectively set as item names. At the same time, "character • sort • totaling" are set as attributes in the items A and B; "character • sort", in the item C; "formula • totaling", in the items D and E; and "formula", in the items F and G. In addition, the following arithmetic expression is set as "formula" in the item F:

$(D + E)/\{total(total (D)) + total(total (E))\}$, and the following arithmetic expression is set as "formula" in the item G:

$(D + E)/\{total[total(total (D))] + [total(total (E))]\}$

Fig. 4 additonally shows the result obtained by performing sort processing with respect to "section in charge", "agent name", and "date". In sort processing, a sort target item located on the left side is processed with preference given to a sort target item located on the right side, and sorting is performed with respect to the next preferential item within the sort range of previous sort processing. Figs. 5A to 5D show a sort processing procedure performed upon data input.

A table formation procedure will now be described in detail below, with reference to Figs. 3A to 5D.

When table formation is to be started, the "table mode" key of the key input section 12 is operated first. Then, "input mode" key is operated, and upon this key input operation, the control section 11 is set in an input mode in the table formation mode. When the "execute" key is operated in this mode, the control section 11 outputs a guide message data "table name?" to the display data memory 19, and displays it on the display section 20 (Fig. 3A). The input position of data is designated by cursor display. When the character keys of the key input section 12 are operated in accordance with the guide message so as to input, for example, "sales data", this input data is stored in the input buffer 13. Subsequently, the input data is stored in the input/edition data memory 14 through the control section 11, and is supplied to the display data memory 19 to be displayed on the display section 20.

After the name of the table is input, the "next item/register" key is operated. Upon this key operation, the table name "sales data" is supplied from the input/edition data memory 14 to the display data memory 15, and is written in the table index storage area 31 shown in Fig. 2. The control section 11 outputs "item A:" and registrable attribute data "remarks, sort, mark, character, formula, and totaling" to the display data memory 19, and displays them on the display section 20 as a guide display (Fig. 3B). If "remarks", "sort", "mark", "character", "sort", and "totaling" are designated as attribute data in this state, the designated attribute data are stored in the input/edition data memory 14, and at the same time, "item A: character, sort, totaling" is displayed (Fig. 3C). If, for example, "section" is input as an item name, this item name is stored in the input/edition data memory 14 and is displayed below the display "item A:" on the screen (Fig. 3D).

After the attribute data and the item name are set for the item A, the "next item/register" key is operated. Upon this key operation, the control section 11 displays "item B:" on the display section 20, together with the registrable attribute data (Fig. 3E). Subsequently, item names and their attribute data are sequentially set by way of the operation described above.

When "section sales ratio" and "formula" are respectively designated as an item name and an attribute on an input screen of "item F" shown in Fig. 3F, the input state is displayed on the screen, as shown in Fig. 3G. Upon operation of the "formula set" key, the following arithmetic expression is set:

(D + E)/total(total (D)) + total(total (E))

Similarly, "formula" is designated as an attribute for "item G", and the following arithmetic expression is set:

(D + E)/{total[total(total (D))] + [total(total(total (E)-)]}

After the data "item name" and "attribute" for all the items A to G are set in the above-described manner, the "execute" key is operated, as a result of which the control section 11 transfers the data "item name" and "attribute data" for all the items A to G, stored in the input/edition data memory 14, to the table data memory 15, shown in detail in Fig. 2, and stores them in the item data storage area 32.

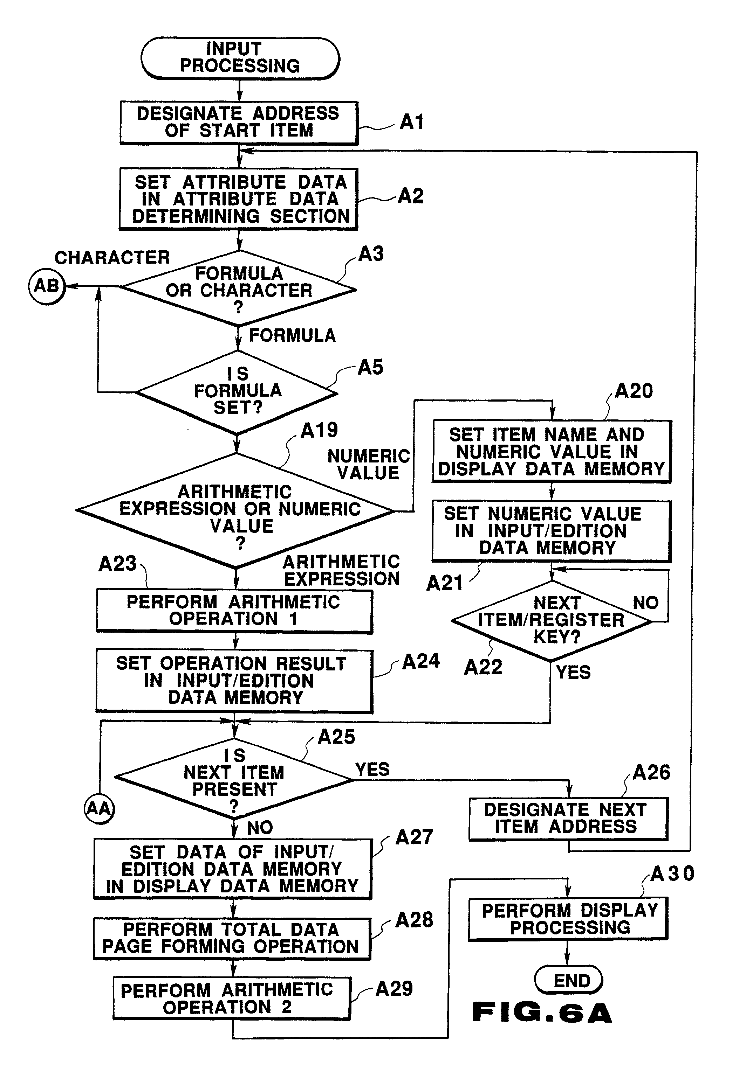

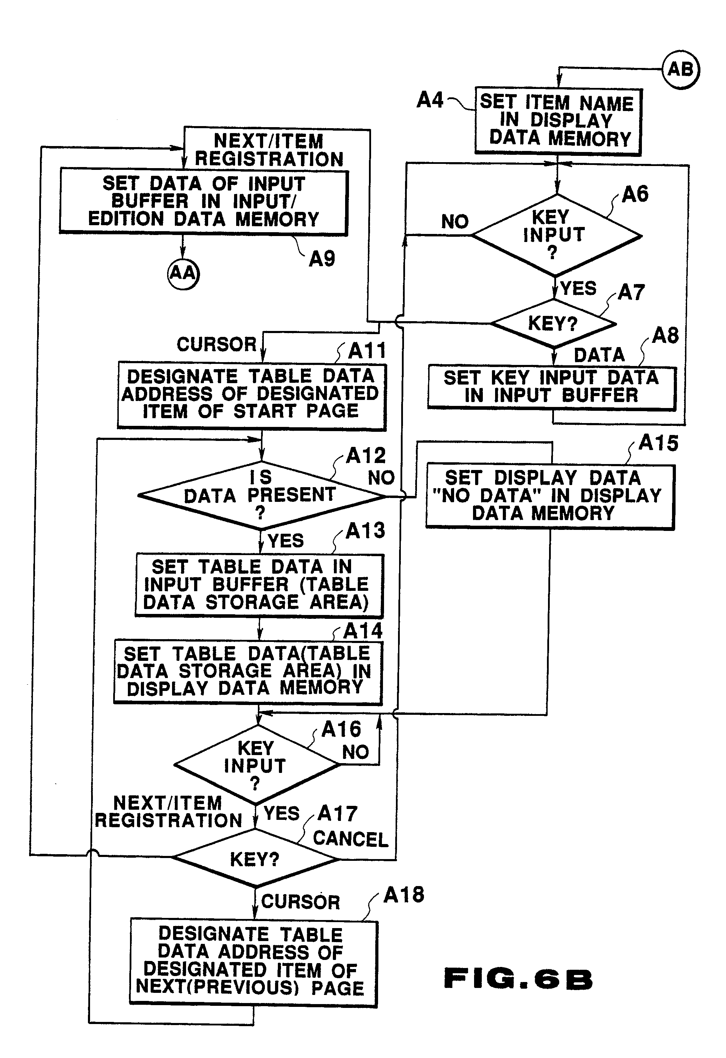

Subsequently, the control section 11 executes data input processing with respect to the table data storage area 33 of the table data memory 15, in accordance with the flow chart shown in Figs. 6A and 6B, designating the address of a start item of the item data storage area 32 (step A1) and reading out attribute data "character, sort, totaling" in the start item into the attribute data determining section 17 (step A2), which section determines whether the input attribute data is character data or a formula (step A3). If the data is character data, the flow advances to step A4, whereas if it is a formula, the flow advances to step A5. Since "character" is set as attribute data in the start item, the flow, in this instance, advances to step A4 to read out an item name into the display data memory 19 and to display "sales section?" on the display section 20 as a guide display (Fig. 3I). In the meantime, the control section 11 is kept in a standby state until a key input operation is performed (step A6).

Next, in accordance with the guide display on the display section 20, the user input "second sales section", preparatory to inputting, as shown in Fig. 5A, the sales of "article A" and "article B" in "January, 1989" by the "second sales section" of "C electric company". When "second sales section" is input, the contents of the key input are checked in step A7. When the first item of data is input, the flow advances to step A8, to write the input data in the input buffer 13, and then returns to step A6. As each item of data is input, the processing in steps A6 to A8 is repeated, to accumulate the input data in the input buffer 13. If the "next item/register" key is operated after all the data relating to the "second sales section" have been input, the contents of the key operation are checked in step A7, and the flow advances to step A9, to transfer the "second sales section" input data accumulated in the input buffer 13 to the input/edition data memory 14. Then the flow advances to step A25, to check for the presence/absence of a "next item". If YES in step A25, the address of the next item is designated in step A26, and the flow returns to step A2. Thereafter, the flow advances to step A4 through step A3, and the "agent name" i.e. the name of the item B, is read out from the table data memory 15 into the display data memory 19 and is displayed on the display section 20 (Fig. 3J). It should be noted that when data of the second and subsequent pages are to be input by using already-registered data so as to facilitate data input, the cursor keys are operated in the key input standby state shown in step A6. Upon commencement of this method of cursor key operation, the flow advances from step A7 to step A11. Subsequently, the processing for simple data imput from step A11 to step A18 is executed.

Similar key input operations and processing are repeated to set the agent name "C electric company" and the date "89. 1" in the items B and C, respectively. In order to set "sales of articles A" in the item D, its attribute data read out. Since the attribute data is "formula", the flow advances from step A3 to step A5, to check whether an equation (a numeric value or an arithmetic expression) is set. If no equation is set, the flow advances to step A4; if an equation is set, the flow advances to step A19. Since, in this example, no equation is set in the item D, sales data "300" of articles A is input to the item D by the processing of step A4 and the subsequent steps. Similarly, sales data "110" of articles B is input to the item E.

If a numeric value is set as a formula, a corresponding item name and the numeric value are read out from the table data memory 15 into the display data memory 19 and are displayed on the screen. At the same time, the numeric value itself is written in the input/edition data memory 14 (steps A20 and A21), and a standby state is set until the "next item/register" key is operated (step A22). When the "next item/register" key is operated, the flow advances to step A25, to check for the presence/absence of a next item.

Since equations are set in the items F and G, the flow advances from step A19 to step A23, to execute an arithmetic operation 1 which will be described in detail later. Since totaling processing is not performed in the case of an input operation in respect of one page, no arithmetic operation is performed, and a non-operation code is registered.

When processing with respect to the last "item G" is completed, it is determined in step A25 that there is no next item present, and the flow advances to step A27. In step A27, the data held in the input/edition data memory 14 are written in the table data memory 15. Thereafter, a total data page forming operation (step A28) and an arithmetic operation 2 (step A29), which will be described in detail later, are executed. When these operations are completed, display processing (step A30) is performed on the basis of the data stored in the table data memory 15.

In the display processing, item names, data, and the like are transferred from the table data memory 15 to the display data memory 19, to be displayed on the display section 20. However, since the display section 20 has only a small display capacity, all the data stored in the display data memory 19 cannot be displayed at once. Therefore, 3-line data is displayed, as shown in Fig. 3K. If a cursor key ∇ for indicating the next item is operated in this state, subsequent data are read out from the display data memory 19 and displayed (Fig. 3L).

When the data of the next page is to be displayed, the "next page" key is operated. Upon this operation, the next page data, i.e., the total data of "C electric company" as an agent of the second sales section, is read out from the table data memory 15 into the display data memory 19, and display thereof on the display section 20 begins (Fig. 3M). If the cursor key ∇ is operated in this state, subsequent parts of the total data of "C electric company" are read out and successively displayed on the display section 20 (Fig. 3N).

If the "next page" key is operated in this state, the total data of "second section" on the next page is read out from the table data memory 15 and display thereof on the display section 20 begins (Fig. 3N).

When the next data is to be input, the "execute" key is operated. Upon this operation, the processing shown in the flow chart of Fig. 6 is started, and "section?" is displayed on the display section 20 so as to guide input of a section. Input processing is performed in the manner described above.

The arithmetic operation 1 (step A23), the registration processing (step A27), the total data page forming operation (step A28), and the arithmetic operation 2 (step A29) will now be described in detail below.

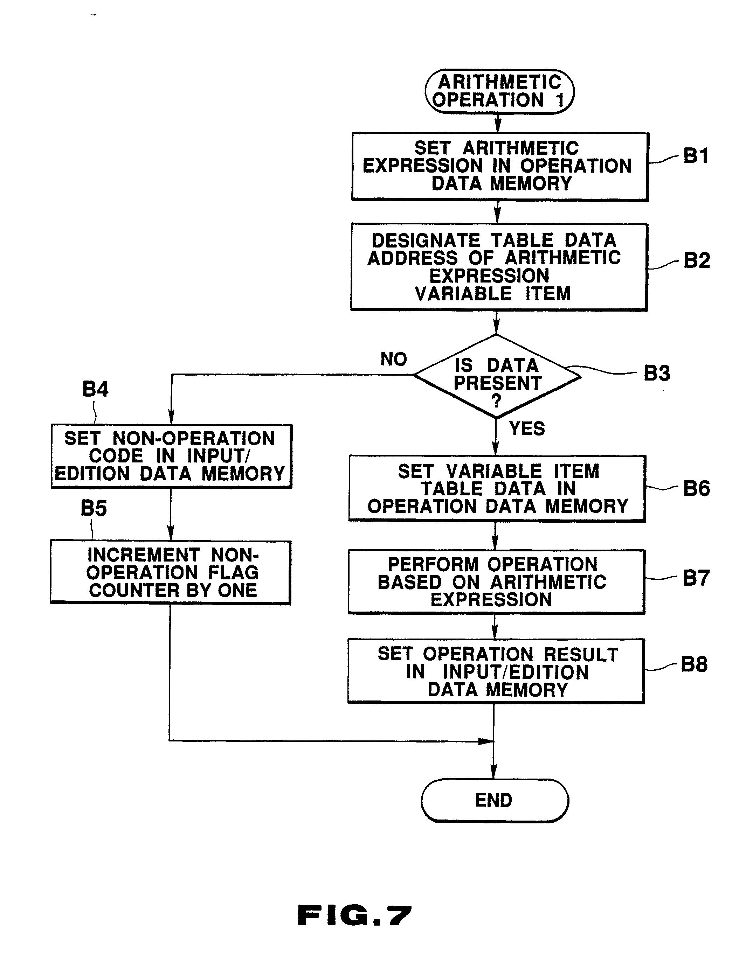

First, the arithmetic operation 1 (step A23) will be described, with reference to Fig. 7. If it is determined in step A19 of Fig. 6 that the formula set in the item F is an arithmetic expression, the arithmetic expression is read into the operation data memory 21 (step B1), and address designation of arithmetic expression variable item table data is performed (step B2). In other words, the table addresses of variable items in the items D and E are designated, as will be described in detail later, and presence/absence of data with respect to all the variable items is checked for. If data is not input in even one of the variable items, the flow advances to step B4, to write in the table data storage area 33 non-operation codes corresponding to the items F and G in the input/edition data memory 14. Since totaling processing is not performed at first, no data is written in the variable items. Hence, the operation in step B4 is performed. Subsequently, the non-operation flag counter 21a in the operation data memory 21 is incremented by one, and the arithmetic operation 1 is complete.

If data are input in all the variable items, YES is obtained in step B3, and the flow advances to step B6, to write the table data of the variable items in the operation data memory 21. An arithmetic operation is then performed on the basis of the preset arithmetic expression (step B7), and the operation result is written in the input/edition data memory 14, thus completing the processing.

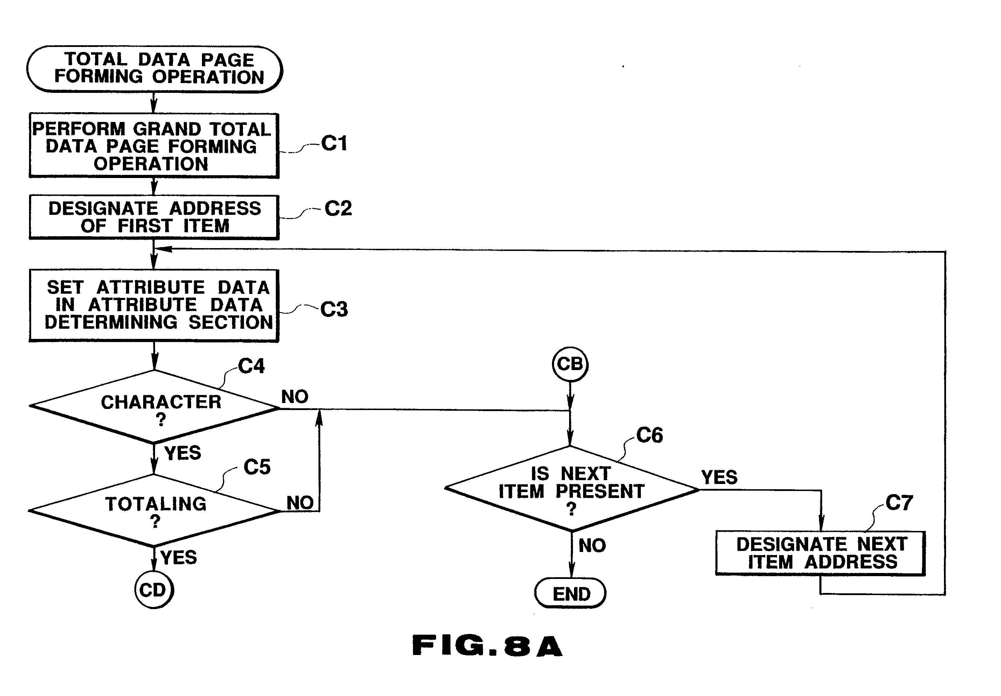

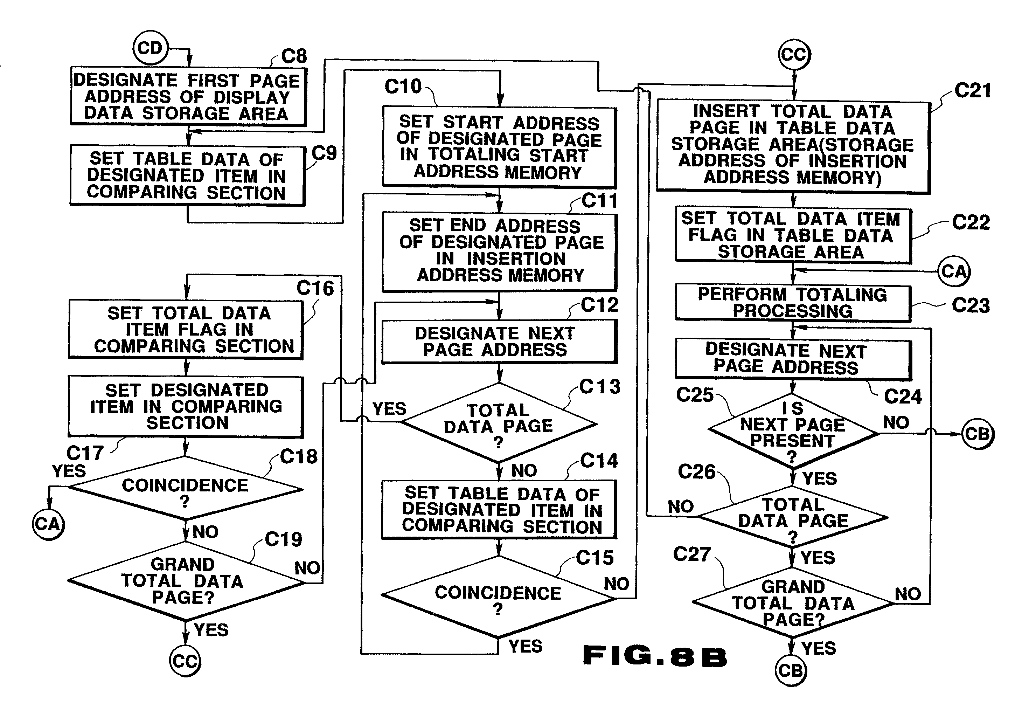

The total data page forming operation (step A28) shown in Figs. 6A and 6B will now be described, with reference to the flow chart of Figs. 8A and 8B. In step C1, a grand total data page forming operation is executed. In this operation, it is checked whether "formula" and "totaling" are set as attribute data of a start item. If they are not set, attribute data of the subsequent items are sequentially checked. If "formula" and "totaling" are set as attribute data, a totaling start address of the table data storage area 33 is designated. The table data of the designated item is read into the operation data memory 21, and subjected to addition processing. Subsequently, similar addition processing is performed from the first page to the last page, and the last totaling result of the designated item is written in the corresponding grand total data page, thus completing the operation. If the data of the first page is input, the grand total data page is formed on the second page, and the input data "300" and "110" of the items D and E are directly written as grand total data.

Next, the address of the start item is designated (step C2), and the corresponding attribute data is read into the attribute data determining section 17. Then, it is checked whether the attribute data is "character" (step C4). If YES in step C4, it is further checked whether "totaling" is set (step C5). If either of "character" and "totaling" is not set as attribute data, the presence/absence of a next item is checked for (step C6). If YES in step C6, the next item address is designated (step C7), and the flow returns to step C3.

Since the attribute data "character" and "totaling" are set in the first item A in the table shown in Fig. 4, an address of the first page in the table data storage area 33 is designated (step C8). The table data of the designated item is then read into the operating/comparing section 18 and is temporarily stored in an internal register (step C9). Assuming that data (300) for the item D of the first page shown in Fig. 5A is input, the name of the sales section, the "second sales section" is temporarily stored in the internal register of the operating/comparing section 18. The start address of the designated page is then stored in the totaling start address memory 23c, and the last address of the designated page is stored in the insertion address memory 23a (steps C10 and C11). The address of the next page is then designated, and it is checked whether the page includes a total data page (grand total data page) (steps C12 and C13). Since, in this instance, the second page is a grand total data page, YES is obtained in step C13, and the flow advances to step C16, to output an item flag of the grand total data page and a flag indicating a designated item to the operating/comparing section 18, and to compare the flags (steps C16 to C18). Since, in this instance, the flags do not coincide, it is checked in step C19 whether the page is a grand total data page. If NO in step C19, the flow returns to step C12. If YES in step C19, the flow advances to step C21.

In this example, YES is obtained in step C19, and the flow advances to step C21, to insert the total data page in front of the grand total data page. In other words, the total data page for the item A, i.e., for the "second sales section", is set in the table data storage area 33, in accordance with the storage address of the insertion address memory 23a. A total item flag is then set with respect to the inserted page (step C22), totaling processing (step C23) (to be described in detail later) is executed, and the totaling results "300" and "110" are written in this total data page.

After this totaling processing is performed, the next page address with respect to the last designated page is designated, and the presence/absence of a next page is checked for (steps C24 and C25). If there is no next page, the flow advances to step C6. If there is a next page, the flow advances to step C26, where it is checked whether the designated page is a total data page. If NO in step C26, the flow returns to step C9. If YES in step C26, the flow advances to step C27, to check whether the page is a grand total data page. If NO in step C27, the flow returns to step C24. If YES in step C27, the flow returns to step C6. Since in this example, it is designated in step C24 that no next page is present, the flow advances to step C7 through steps C25 and C6, to designate the next item B.

After attribute data for the item B is checked, the operations in steps C3 to C5, C8 to C13, and C16 to C18 are performed in the same manner as in the case of the item A. Since the next page designated in step C12 corresponds to the total data page for the item A obtained in the previous processing, it is determined in step C19 that the page is not a grand total data page, and the flow returns to step C12. Since the next page designated in step C12 is a grand total data page, the flow advances to step C21 through steps C13 and C16 to C19, similar to the case of the item A. In step C21, the total data page for the C electric company is inserted in the total data page of the second section, on the basis of the address (the last address of the first page) which was stored in the insertion address memory 23a in step C11.

Since the attribute data "character" and "totaling" are not simultaneously set in the item C and the subsequent items, a total data page is not formed. When it is determined in step C6 that there is no next page, the processing is complete.

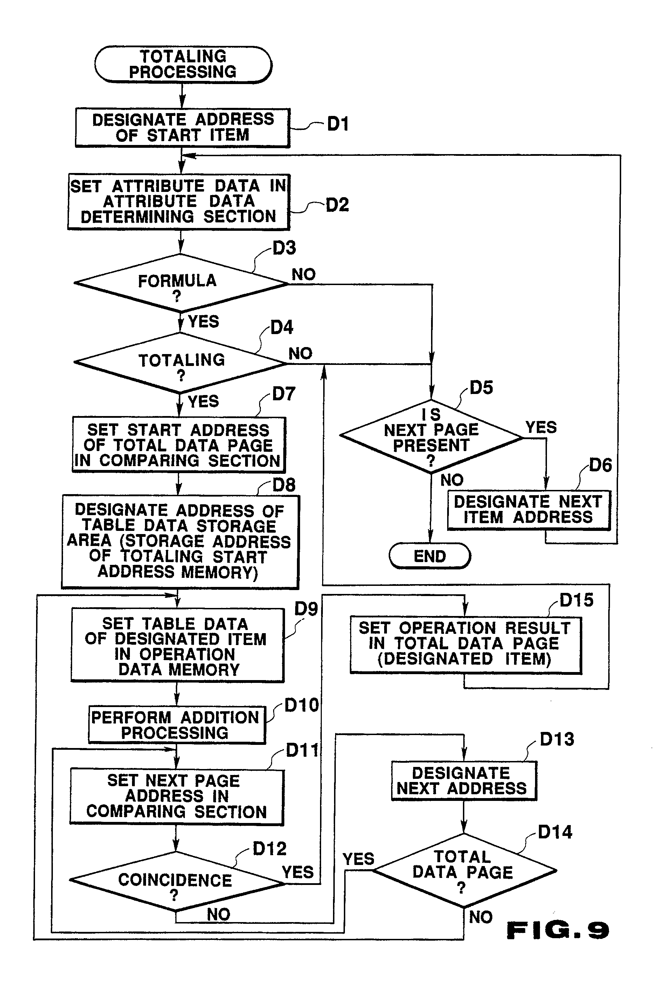

The totaling processing in step C23 is performed in accordance with the flow chart of Fig. 9. First the address of the first item is designated (step D1), and the attribute data for the item is then read into the attribute data determining section 17, so as to check whether "formula" is set (step D3). If "formula" is set as attribute data, it is further checked whether "totaling" is set (step D4). If at least either of "formula" and "totaling" is not set as attribute data, the presence/absence of a next item is checked for (step D5). If YES in step D5, the address of the next item is designated (step D6), and the flow returns to step D2.

Since "formula" and "totaling" are not simultaneously set as attribute data in the items A to C of the table shown in Fig. 4, address designation advances to the item D upon completion of the processing performed in steps D2 to D6. Since both "formula" and "totaling" are set as attribute data in the item D, YES is obtained in step D4, and the flow advances to step D7, to output the start address of the corresponding total data page -in this case, the "second page" - to the operating/comparing section 18 and to store it in its internal register. The table data storage area 33 is then subjected to address designation, in accordance with the address data stored in the totaling start address memory 23c (step D8), and designated item table data "300" is read into the operation data memory 21 and subjected to addition processing (step D10). In addition processing of the first page, the input data "300" is held directly in the operation data memory 21 as the addition result.

Subsequently, the next page address (second page) is output to the operating/comparing section 18 and is compared with the address held in the internal register (step D12). Since, in this instance, the total data page is set in actual second page, YES is obtained in step D12, and the flow advances to step D15. In step D15, the operation result "300" is written in the designated item, i.e., the total data page for the item D.

The flow then advances to step D6 through step D5, to designate the address of the next item E. Totaling processing is performed in step D2 and the subsequent steps in the same manner as in the case of the item D, and the operation result, "110", identical to the input data in this case, is written in the total data page for the item E.

Since "totaling" is not set in the items F and G as attribute data, totaling operations in step D7 and the subsequent steps are not performed. When it is determined in step D5 that there is no next page, the totaling processing is complete.

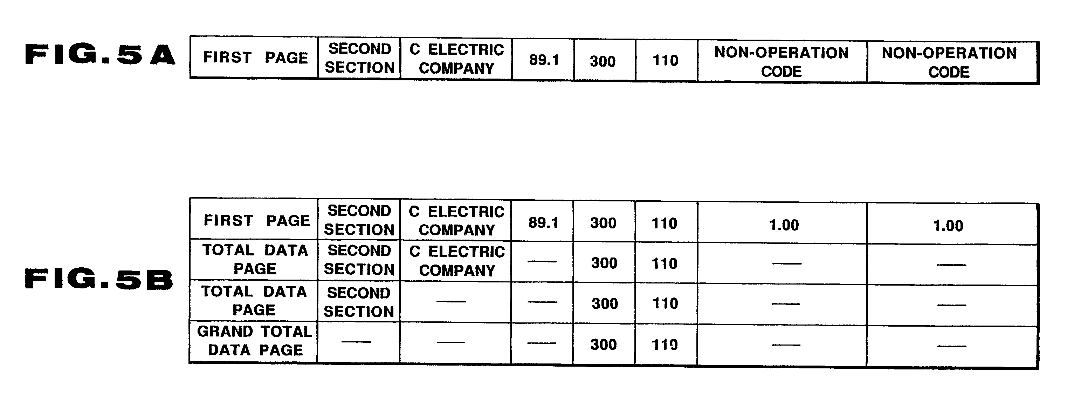

Totaling with respect to the second section is performed, and subsequent thereto is performed with respect to the C electric company by way of the above-described totaling processing, as shown in Fig. 5B.

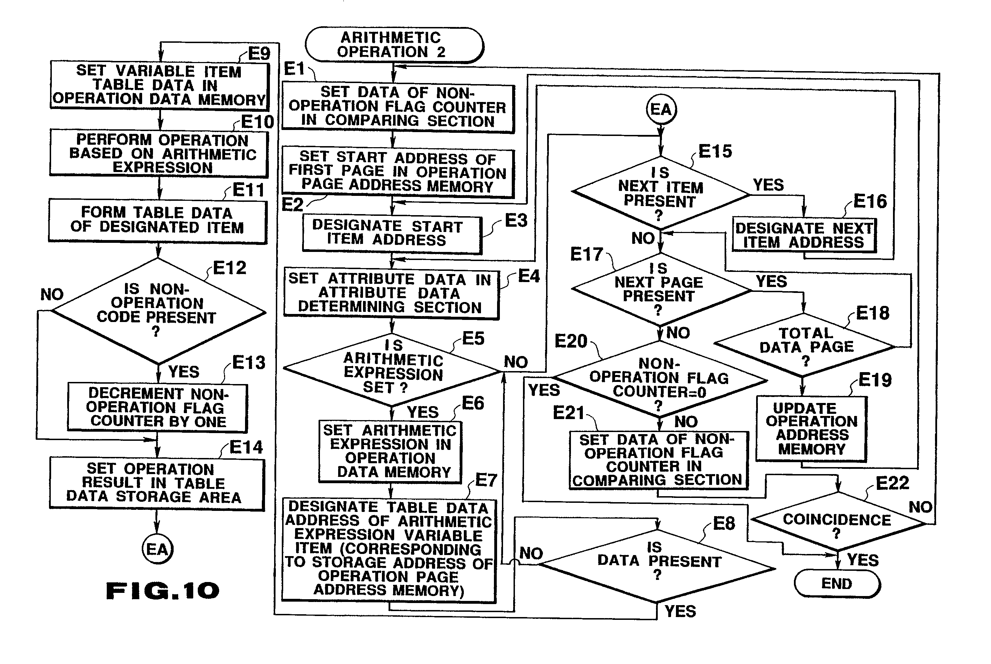

After the formation of the total data pages, the arithmetic operation 2 in step A29 of Fig. 6A is executed, in accordance with the flow chart of Fig. 10. The count value of the non-operation flag counter 21a of the operation data memory 21 is read in the operating/comparing section 18 and is stored in the internal register (step E1). At the same time, the start address of the first page is stored in the operation page address memory 23d (step E2). Thereafter, the address of the start item A is designated, and the corresponding attribute data is read into the attribute data determining section 17, so as to check whether an arithmetic expression is set (steps E3, E4, and E5). Since no arithmetic expression is set in the first item A, the flow advances to step E15, to check for the presence/absence of a next item. If there is a next item, the address thereof is designated, and the flow returns to step E4, to check the attribute data. Since no arithmetic expression is set in the items A to E, totaling processing is not performed, and the subsequent items are sequentially designated.

When the item F is designated, and since an arithmetic expression is set, the flow advances from step E5 to step E6, to output the arithmetic expression to the operation data memory 21 and to designate an arithmetic expression variable item table data address on the basis of the address data stored in the operation page address memory 23d (steps E6 and E7). Then, the presence/absence of data is checked for (step E8). If there is table data of the variable items formed, the flow advances to step E9. If no data is formed, the flow advances to step E15. Since the table data of the variable items are already formed for the items D and E, these data are output to the operation data memory 21, and an arithmetic operation is executed (step E10). According to the arithmetic expression for the item F, an arithmetic operation is performed by using section total data. In the processing of the table shown in Fig. 5B, an arithmetic operation is performed by using the total data "300" and "110" of the second section. "1. 00" is obtained as the operation result, and is stored in the operation data memory 21.

Thereafter, it is checked whether the designated item table data includes a non-operation code (step E11 and E12). If a non-operation code is present, the non-operation flag counter 21a is decremented by one, and the flow advances to step E14. If no non-operation code is present, the flow advances directly to step E14, to output the operation result held in the operation data memory 21 to the table data memory 15 and to write it in the table data storage area 33.

Subsequently, the flow returns to step E14 through steps E15 and E16, so as to perform the processing described above with respect to the next item, G. In this processing, an arithmetic operation is executed by using the grand total data "300" and "110" of the grand total data page as the data of a variable item, and the operation result "1. 00" is obtained. Since, in this instance, the data of the total data page of the second section is identical to that of the grand total data page, the operation results for the items F and G thus coincide with each other.

When the processing of the items A to G is complete, the presence/absence of a next page is checked for (step E17). If there is a next page, it is checked whether it is a total data page (step E18). If YES in step E18, the flow returns to step E17, to check for the presence/absence of a next page. By way of the above-described processing, the processing flow advances to a page which is not a total data page, i.e., the next data storage page, and the contents of the operation page address memory 23d are updated (step E19). Then, the flow returns to step E3.

Subsequently, the processing described above is repeated, and when the processing of all pages is complete, this is detected in step E17, and the flow advances to step E20, to check whether the count value of the non-operation flag counter 21a is "0". In other words, it is checked whether all the arithmetic operations have been performed in respect of those items for which no arithmetic operations are allowed prior to the above-described processing. If NO in step E20, the count value of the non-operation flag counter 21a is output to the operating/comparing section 18 and is compared with the count value held in the internal register of the operating/comparing section 18 in step E1 (step E22). In other words, if all the arithmetic operations in respect of these items have not been performed, therefore since the non-operation flag counter 21a is not decremented by one upon detection of a non-operation code in step E12, YES is obtained in step E22, to complete the processing. Thus, arithmetic operations cannot be performed in respect of the items even by repeating the operations based on the flow of the arithmetic operation 2, and it is for this reason that the above-described processing is performed, to advance to the next input processing or the like.

If the non-operation flag counter 21a is decremented by one upon detection of a non-operation code, NO is obtained in step E22. Therefore, since arithmetic operations in respect of those items for which no arithmetic operations have hitherto been allowed may be performed, the flow returns to step E1, to resume the arithmetic operation. When the arithmetic operation is to be resumed, the current value of the non-operation flag counter 21a is input to the internal register of the operating/comparing section 18. This arithmetic operation is repeated until the count value of the non-operation flag counter 21a becomes "0", or the value of the non-operation flag counter 21a at the start and end (steps E1 and E22) of the arithmetic no longer change.

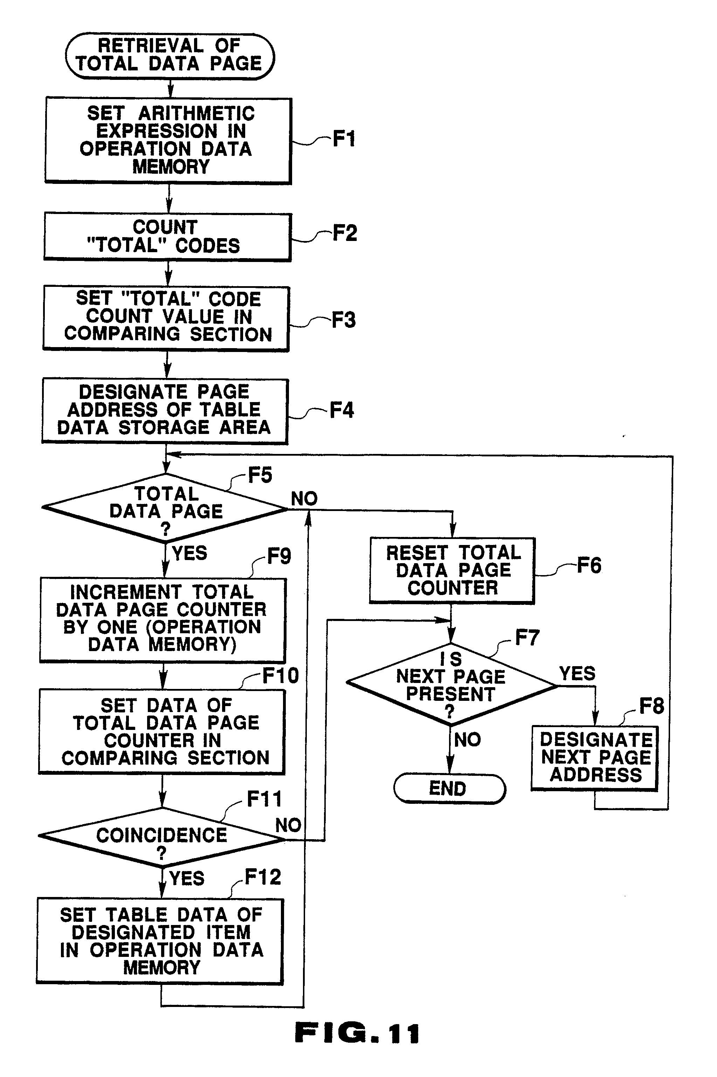

Retrieval of the table data address of the arithmetic expression variable item in step B1 of the arithmetic operation 1 shown in Fig. 7 or step E7 of the arithmetic operation 2 shown in Fig. 10, i.e., total data page retrieval, is performed in accordance with the flow chart of Fig. 11.

Referring to this flow chart, an arithmetic expression is read into the operation data memory 21 (step F1), and the number of "total" codes in the respective items is counted by the total- code counter 21c (step F2). The count value is then output to the operating/comparing section 18 and is stored in the internal register (step F3). Address designation of the first page of the table data storage area is performed, and it is checked whether the page is a total data page (steps F4 and F5). If the page is not a total data page, the total data page counter 21b is reset (step F6), and the presence/absence of a next page is subsequently checked for. If there is a next page, the address thereof is designated in step F8, and the flow returns to step F5.

By way of the above processing, each page is checked in sequence. If a total data page is detected, the total data page counter 21b is incremented by one (step F9), and the count value is output to the operating/comparing section 18, to be compared with the count value of the total data code counter 21c (steps F10 and F11). If the count values do not coincide, the flow advances to step F7, to check for the presence/absence of a next page. If YES in step F11, the flow advances to step F2, to read the table data of the designated item in the operation data memory 21, and the flow returns to step F6.

Since succeeding number of "total" codes in the arithmetic expression designated in the item F is two, two continuous pages are detected, and the data of the second total data page, i.e., the total data page with respect to the sales section, are designated. In the table shown in Fig. 4, total data "410" in the item D and total data "280" in the item E with respect to the first section are subjected to address designation and are read into the operation data memory 21.

Since the number of succeeding "total" codes in the arithmetic expression designated in the item G is three, three continuous total - pages are detected, and the data of the last total - page, i.e., the grand total data page, are designated. In the table shown in Fig. 4, total data "870" in the item D and total data "510" in the item E of the grand total data page are subjected to address designation and are read into the operation data memory 21.

In the above-described manner, total page retrieval is performed, and the total data are read into the operation data memory 21. Arithmetic operations are then performed on the basis of this total data.

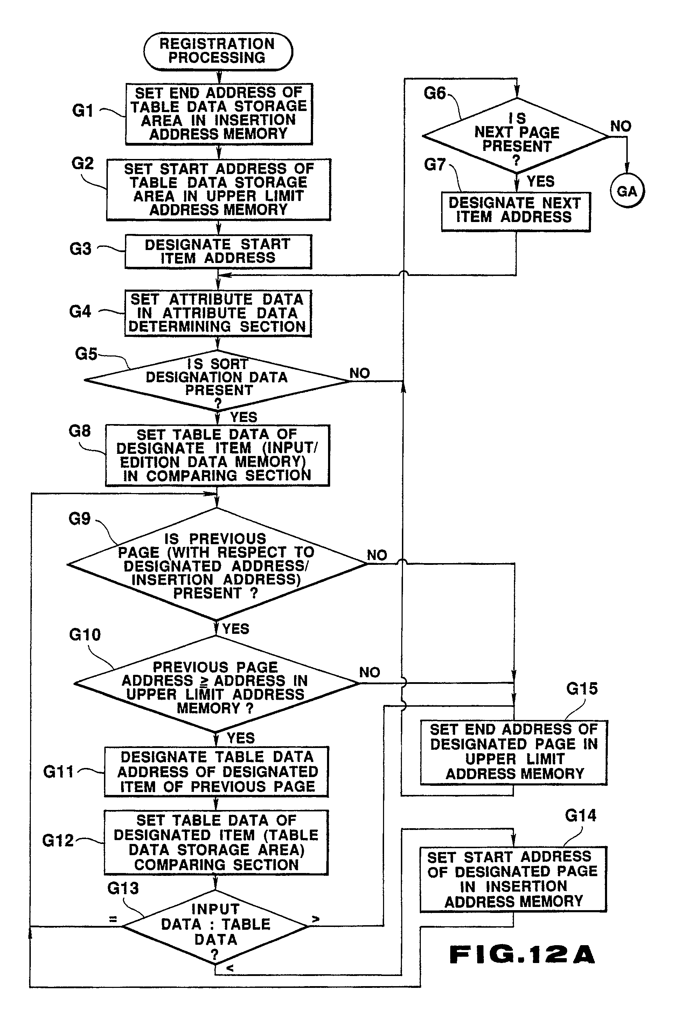

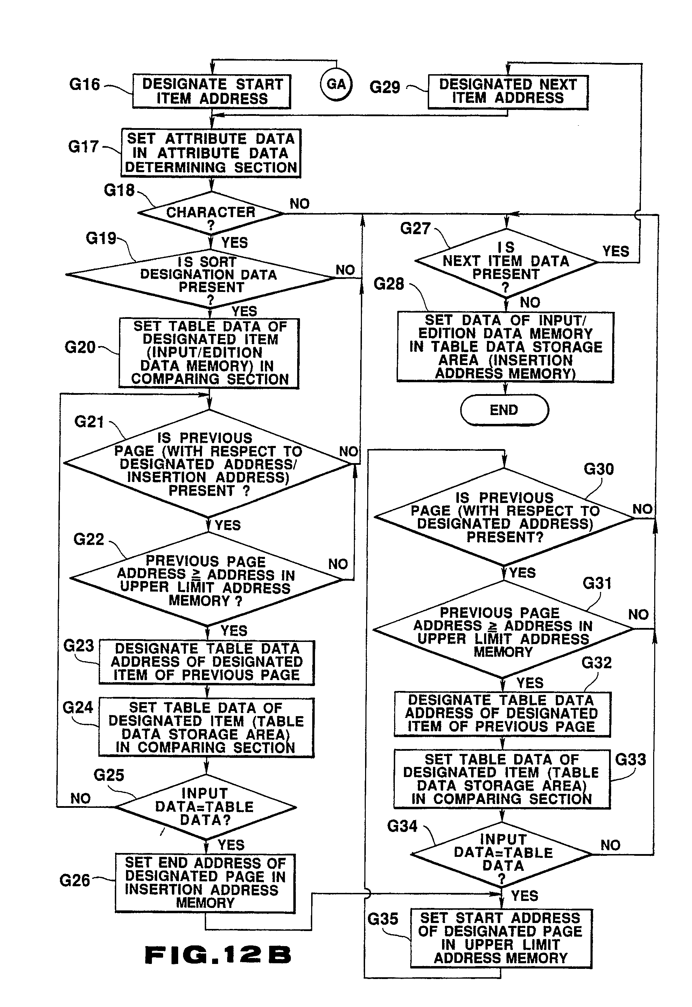

The registration processing performed in step A27 of Fig. 6A will be now described in detail, with reference to the flow chart of Figs. 12A and 12B.

In performing registration processing, the end address of the table data storage area 33 in the table data memory 15 is set in the insertion address memory 23a in the address control section 16 (step G1). At the same time, the start address of the table data storage area 33 is set in the address memory 23b (step G2). The address of the start item A is designated, and the corresponding attribute data is read into the attribute data determining section 17 (steps G3 and G4), and the presence/absence of sort designation is checked for (step G5). If NO in step G5, the address of the next item B is designated (step G7) through step G6, in which step the presence/absence of a next item is checked for.

Since, in this instance, "sort" is designated as attribute data of the item A, the flow advances from step G5 to step G8, to read out the table data of the designated item from the input/edition data memory 14, and to output it to the operating/comparing section 18. If the input data of the first page shown in Fig. 5A, for example, is to be registered, the section, i.e., the "second section", is input to the operating/comparing section 18.

Then, in step G9, the presence/absence of a previous page with respect to the insertion address is checked for. Since no previous page is present before the registration of the first page, the end address of the designated page, i.e., the address of the first page, is set in the upper limit address memory 23b. Thereafter, the flow returns to step G7 through step G6, and the next item address is designated. Since no sort designation is performed in the item D or subsequent items, the flow advances directly from step G5 to step G6. Subsequently, processing of each of the respective items is performed in the manner described above.

When the processing of all the items is complete, the flow advances from step G6 to step G16, to designate the start item address of data to be registered. The corresponding attribute data is then read into the attribute data determining section 17, and it is checked whether this data is "character" (steps G17 and G18). Since "character" is set as attribute data in the start item A, the presence/absence of "sort" is then checked for. If "sort" is designated, the flow advances to step G27, to check for the presence/absence of next item data. If YES in step G27, the address of the next item is designated in step G29. Since "sort" is designated in the items A to C, no special processing is performed, and since "character" is not designated as attribute data in the items D to G, no special processing is performed in this case either.

When processing of the items A to G is complete, and it is determined in step G27 that there is no next item, the flow advances to step G28, to register the table data which is stored in the input/edition data memory 14 upon edition, i.e., the table data shown in Fig. 5A, in the table data storage area 33, in accordance with the address stored in the insertion address memory 23a.

If the sales data of the first section is input to the second page while the data shown in Fig. 5A is set in the table data memory 15, sort processing is performed, as shown in Fig. 5C. In step G1 to G5, processing similar to that conducted in respect of the registration of the data of the first page is performed, and when the attribute data of the item A is read out, it is determined in step G5 that "sort" is designated. As a result, the flow advances to step G8, to read out the table data of the designated item from the input/edition data memory 14 into the operating/comparing section 18 and store it in the internal register. If the input data of the second page is to be registered, "first section" is input as the section to the operating/comparing section 18.

At this stage, the presence/absence of the previous page with respect to the insertion address is checked for (step G9), and if the previous page is present in registration of the second page, the flow advances to step G10, to check whether the address of the previous page is higher than the address stored in the upper limit address memory 23b. If NO in step G10, the flow advances to step G15. If YES in step G10, the flow advances to step G11. When the data of the second page is to be registered, the address of the previous page coincides with the address stored in the upper limit address memory 23b. Therefore, YES is obtained in step G10, and the flow advances to step G11, to designate the address of the table data of the designated item of the previous page. The table data of the designated item A, i.e., the "second section" is input into the operating/comparing section 18. The section 18 compares the code of the first character of the input data with the code of the first character of the table data. If the codes compared are equal, then the section 18 compares the code of the second character of the input data with the code of the second character of the table data, and so forth, until codes compared are found to be not equal. When the codes compared are not equal, the section 18 stops comparison. If the code of the input data is larger than that of the table data, the flow advances to step G15. If the code of the input data is smaller than that of the table data, the flow advances to step G14. If both codes are equal, the flow returns to step G9. Since, in this instance, the code of first character "f" in the input data "first section" is smaller than that of first character "s" in the table data "second section", the flow advances to step G14 to store the start address of the designated page in the insertion address memory 23a, after which the flow returns to step G9. When the flow has returned from step G13 or G14 to step G9, the page designation address is decremented by one, and the processing performed in the step G9 and in the subsequent steps is repeated. More specifically, if a plurality of pages are already stored in the table data memory 15, the processing in steps G9 to G14 is repeated, and sort processing is performed by data rewrite of the insertion address memory 23a. If the section code already registered after the start address of the designated page set in the insertion address memory 23a has been confirmed by the above-described sort processing is the same as the sorted section code, the processing performed in steps G9 to G13 is further repeated to obtain the address of the uppermost page of this section code, and the address obtained is set in the upper limit address memory 23b. In other words, the address of the uppermost page of this section code is confirmed and written in the upper limit address memory 23b (step G15) when the following decisions are made in steps G9 to G13: in step G9, it is determined that the processing of the first page is complete; in step G10, it is determined that the address stored in the upper limit address memory 23b is larger than the previous page address; and in step G13, it is determined that the character code of table data is smaller than that of the input data.

Subsequently, processing of the next item is executed after steps G6 and G7 have been performed.

Sort processing is executed for the items B and C in the same manner as described above.

When processing of all items is complete, the flow advances from step G6 to step G16, to designate the start item address of data to be registered. The corresponding attribute data is then read into the attribute data determining section 17, and it is checked whether this data is "character" (steps G17 and G18). Since "character" is set as attribute data in the items A to C, it is further checked in step G19 whether "sort" is designated. Since "sort" is designated, the flow returns directly to step G17 through steps G27 and G29. Since "character" is not designated as attribute data in the items D to G, the flow returns from step G18 to step G17 through steps G27 and G29. When processing of the items A to G is complete, the data held in the input/edition data memory 14 is output to the table data memory 15 and is registered in the table data storage area 33 in step G28.

If "character" is designated as attribute data of the item and "sort" is not designated (this case is not shown in Fig. 4), the flow advances from step G19 to step G20, to execute a summarizing operation.

More specifically, in step G20, the table data of the designated item is read out from the input/edition data memory 14 into the operating/comparing section 18, and the presence/absence of a previous page with respect to the insertion address is checked for (step G21). If there is a previous page, the flow advances to step G22. If no previous page is present, the flow advances to step G27. If the insertion address is of the first page, it is determined that no previous page is present, and the flow advances to step G27, to check for the presence/absence of a next item data. If YES in step G27, the address of the next item is designated (step G29), and the corresponding attribute data is read into the attribute data determining section 17. It is then checked whether the attribute data is "character" (steps G17 and G18). If "character" is not set as attribute data, the presence/absence of a next item is immediately checked for in step G27.

The address of a next item is designated (step G29), and the corresponding attribute data is read into the attribute data determining section 17 so as to check for the presence/absence of attribute data "character" (steps G18 and G19). Then, the presence/absence of "sort" is checked, for and the contents of each item are subsequently checked in the manner described above. If NO in step G27, the input data held in the input/edition data memory 14 is registered in the table data memory 15, in accordance with the insertion address stored in the insertion address memory 23a.

A page summarizing operation is performed on the basis of the data of the items in which sort designation is not performed, and the attribute data "character" is set as described above. In other words, identical data are located in adjacent pages within a sort range. In addition, if identical data are present in items to be processed after this summarizing operation, a further summarizing operation is performed by rearranging the pages in step G30 to G35 within the range in which the initial summarizing operation is performed.

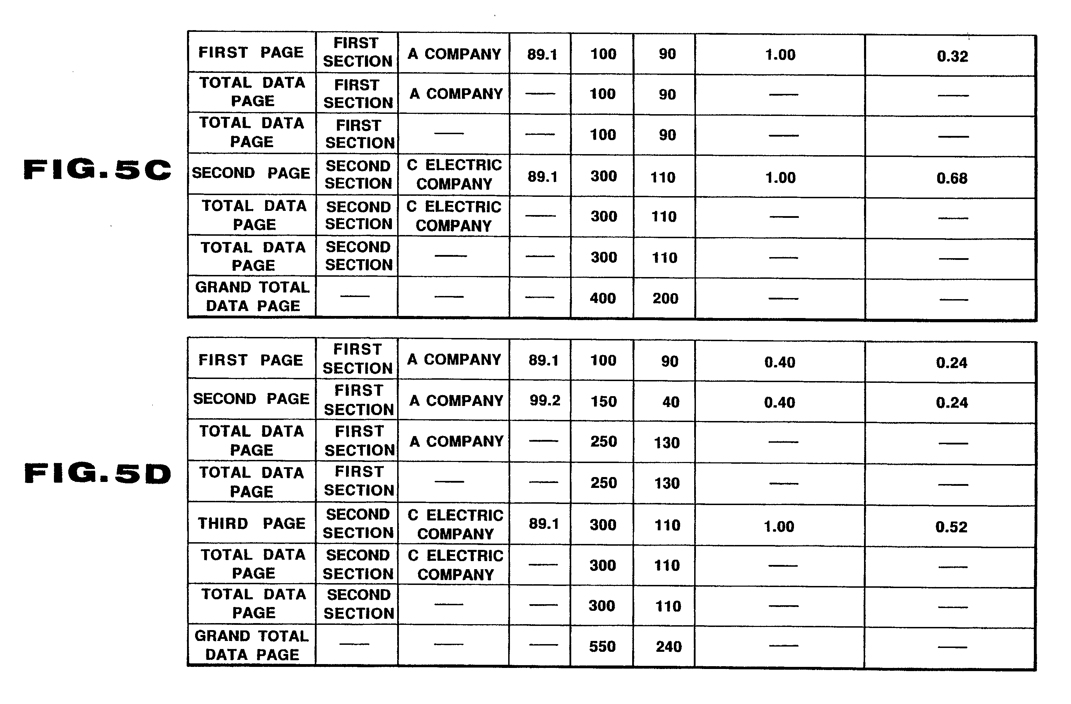

In the above-described manner, the input data is registered in the table data memory 15, and sort processing is performed during data registration processing. With respect to the data registered in the table data memory 15, the total data page forming operation (step A28) and the arithmetic operation 2 (step A29) are performed to form the table shown in Fig. 4. In particular, when the data of the first section is input after the data of the second section shown in Fig. 5A has been input, sort processing is performed during registration, as shown in Fig. 5C. Thereafter, as shown in Fig. 5D, totaling processing is performed by way of the total data page forming operation (Figs. 8A and 8B) and the arithmetic operation 2 (Fig. 10), in the same manner as in the case shown in Fig. 5B.

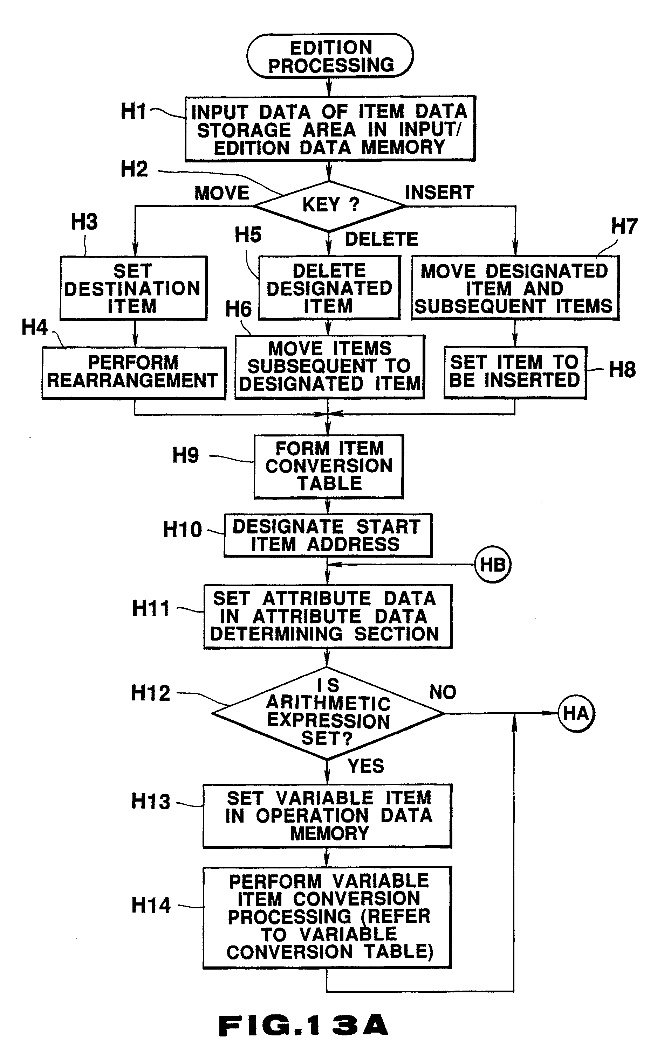

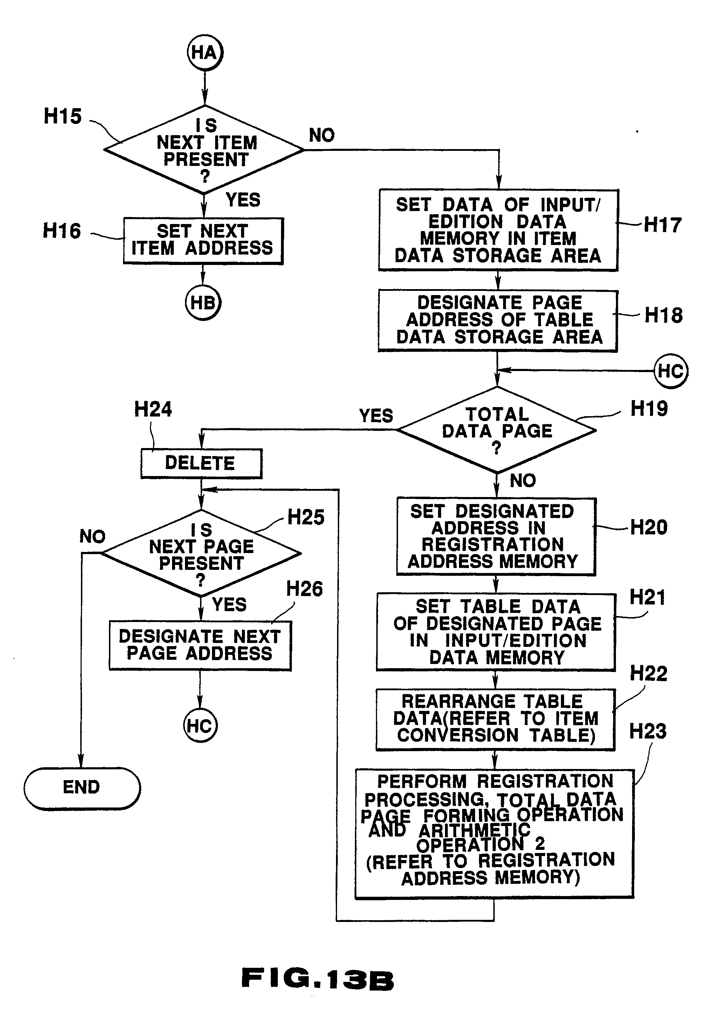

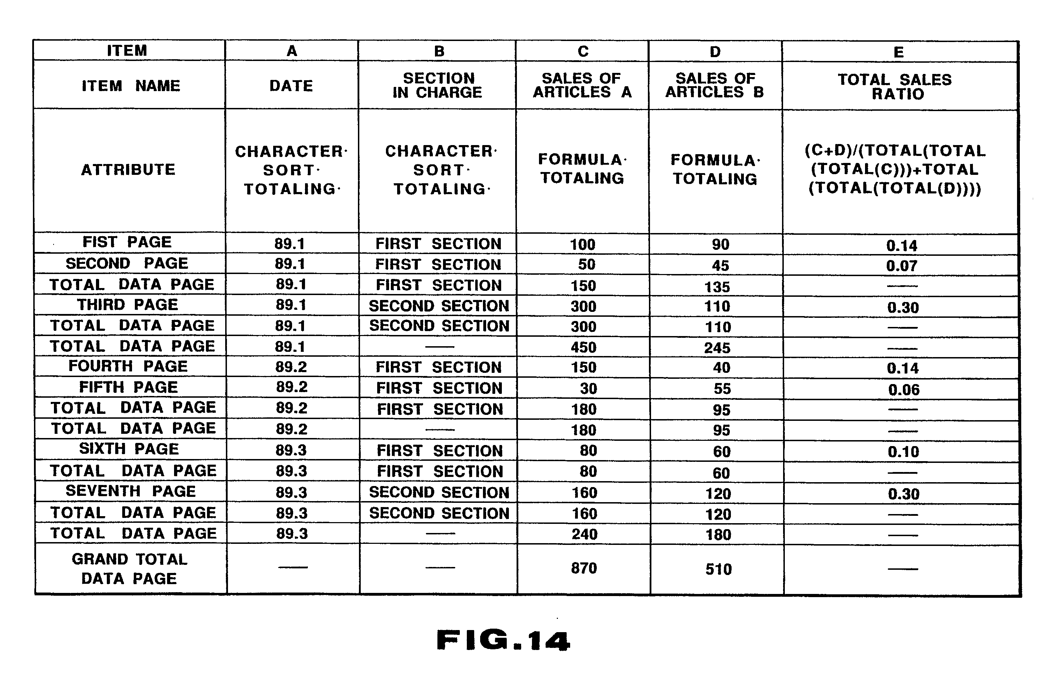

Edition processing such as moving, deleting, and inserting of items with respect to the table formed in the above-described manner will now be described, with reference to Figs. 13A and 13B, which is a flow chart showing edition processing, and Fig. 14 which shows an edition result. In the table shown in Fig. 14, "date" in "item C" of the table shown in Fig. 4 is moved to "item A", and "totaling" is added to the corresponding attribute data "character, sort". In addition, "item B" and "item F" are omitted in the table shown in Fig. 14.

When the "edition mode" is designated by the "edition mode" key, the edition processing shown in the flow chart in Figs. 13A and 13B is started by the control section 11. Specifically, when the "edition mode" is designated, the control section 11 reads out data from the item data storage area 32 of the table data memory 15 into the input/edition data memory 14 (step H1), and is kept in a standby state until the next key input is performed. In this state, a user operates the cursor key to display on the screen an item to be subjected to edition, i.e., "move", "delete", and "insert", and selectively operates the edition keys designating these actions. Key operation is detected in step H2, and processing corresponding to each key operated is executed.

If for example, the "move" key is operated, a destination item is set, and rearrangement of the items is performed (steps H3 and H4). If the "delete" key is operated, delete processing of a designated item is performed (step H5), and the items subsequent to the designated item are moved (step H6). If the "insert" key is operated, a designated item and subsequent items are sequentially moved (step H7), and an insertion item is set between the designated item and the previous item (step H8).

When the processing in steps H4, H6, and H8 is complete, the flow advances to step H9, to form an item conversion table in the operation data memory 21.

For example, when "item B" and "item F" are to be deleted from the table shown in Fig. 4, the cursor key is operated to display "item B", as a target item, on the screen, and the "delete" key is operated. Upon operation of the "delete" key, the control section 11 deletes all the data of "item B" on the screen (step H5), and sequentially moves "item C" to "item G" in the direction of upper items. As a result, "item C" to "item G" are rearranged as "item B" to "item F". Thereafter, an item conversion table indicating the relationship between the respective items before and after the deletion of "item B" is formed in the operation data memory 21 in step H9. The address of the start item is designated (step H10), and the corresponding attribute data is read into the attribute data determining section 17, and it is checked whether an arithmetic expression is set (steps H11 and H12). Since no arithmetic expression is set in the item A, the flow advances to step H15, to check for the presence/absence of a next item (step H15). If there is a next item, the address thereof is designated, and the flow returns to step H11. In this instance, the address of the item B is designated, and the flow returns to step H11, to check the corresponding attribute data. Since no arithmetic expression is set in the items A to D, the processing in steps H11, H12, H15, and H16 is repeated. When the attribute data of the new item E is read out, and since an arithmetic expression is set therein, the flow advances from step H12 to step H13, to read out the variable items of the arithmetic expression from the input/edition data memory 14 into the operation data memory 21. Conversion of the variable items is then performed with reference to the item conversion table formed in the operation data memory 21. That is, the variable items "D" and "E" in the arithmetic expression are converted into "C" and "D", respectively. The flow then returns to step H15, to set the variable items of the arithmetic expression in the item F in the same manner as in the case of the item E.

When the processing of the item F is complete, the flow advances from step H15 to step H17, to transfer the data held in the input/edition data memory 14 to the table data memory 15, and to write it in the item data storage area 32. The address of the first page of the table data storage area 33 is designated, and it is checked whether the first page is a total data page (step H19). If NO in step H19, the designated address is stored in the registration address memory 23e in the address register 22, and, the table data of the designated page is read out from the table data memory 15 and is stored in the input/edition data memory 14 (steps H20 and H21). Rearrangement of the table data is performed with reference to the item conversion table in the input/edition data memory 14 (step H22). By referring to the storage address of the registration address memory 23e, the registration processing (Figs. 12A and 12B), the total data page forming operation (Figs. 8A and 8B), the arithmetic operation 2 (Fig. 10), and the like are executed.

Then, the flow advances to step H25, to check for the presence/absence of the next page. If there is a next page, its address is designated (step H26), and the flow returns to step H19, to check whether the page is a total data page. If YES in step H19, the (total data) page is deleted (step H24), and the flow advances to step H25. Subsequently, the processing described above is repeated to delete the previous total data page, and a total data page forming operation is performed to form a new total data page into which is input new operation result. The is editin process for "item B" is finished when processing of all pages has been performed, and it is determined in step H25 that there is no next page to process.

Subsequently, in the edition mode, operater display "item E" as a deletion target on the screen to delete it, and the "delete" key is operated. Upon operation of the "delete" key, "item E" is deleted in the same manner as in the case of the item B. The item F is moved to the position of the item E. Registration, a total data page forming operation, an arithmetic operation, and the like are performed with respect to the new item E.

For example, when the item C is to be moved to the position of the item A, the "move" key is operated while the item C as a target item is displayed on the screen. With this operation of the "move" key, the flow advances from step H2 to step H3, and the control section 11 displays "destination?" on the screen as a guide display. When the designation, i.e., the position of the item A, is designated in accordance with this guide display, the control section 11 sets a designation item to the item A, and executes rearrangement processing (steps H3 and H4). More particularly, rearrangement is performed such that "date" is set in the item A; "section in charge", in the item B; and "sales of articles A", in the item C. In this state, a user displays the item A on the screen and adds "totaling" to the already-set attribute data "character" and "sort". Subsequently, the above-described processing in step H9 and the subsequent steps is executed.

In step H23, "registration processing" shown in the flow chart in Figs. 12A and 12B is performed, and the registered data are sorted in steps G8 to G15. That is, as shown in Fig. 14, the data of the item A are sorted first in the order of "date", and the data of the item B are sorted in units of "section in charge" within the sort range of "date". The result is then registered in the table data memory 15.

Subsequently, the "total data page forming operation" shown in the flow chart in Figs. 8A and 8B is executed with respect to the table data registered in the table data memory 15. As a result, a total data page is formed on the basis of "character" and "totaling" set in the item A as attribute data, and totaling processing is performed with respect to the items C and D. An arithmetic operation is executed according to an arithmetic expression set in the item E by the "arithmetic operation 2" shown in the flow chart in Fig. 10. The above-described processing is performed for each page. When the processing of all the pages is completed, and it is determined in step H25 that no next page is present, the edition processing is completed. With the above-described processing, the table shown in Fig. 14 is formed.

An operation of forming another table, especially a table using "remarks" and "mark", and an output operation thereof will be described below.

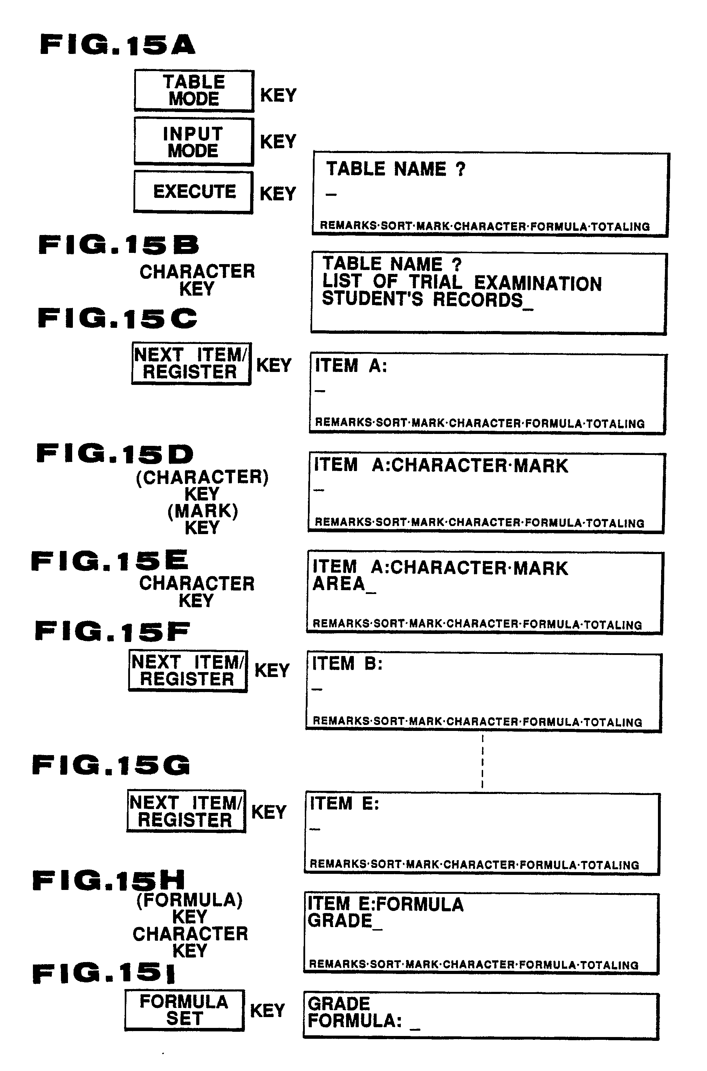

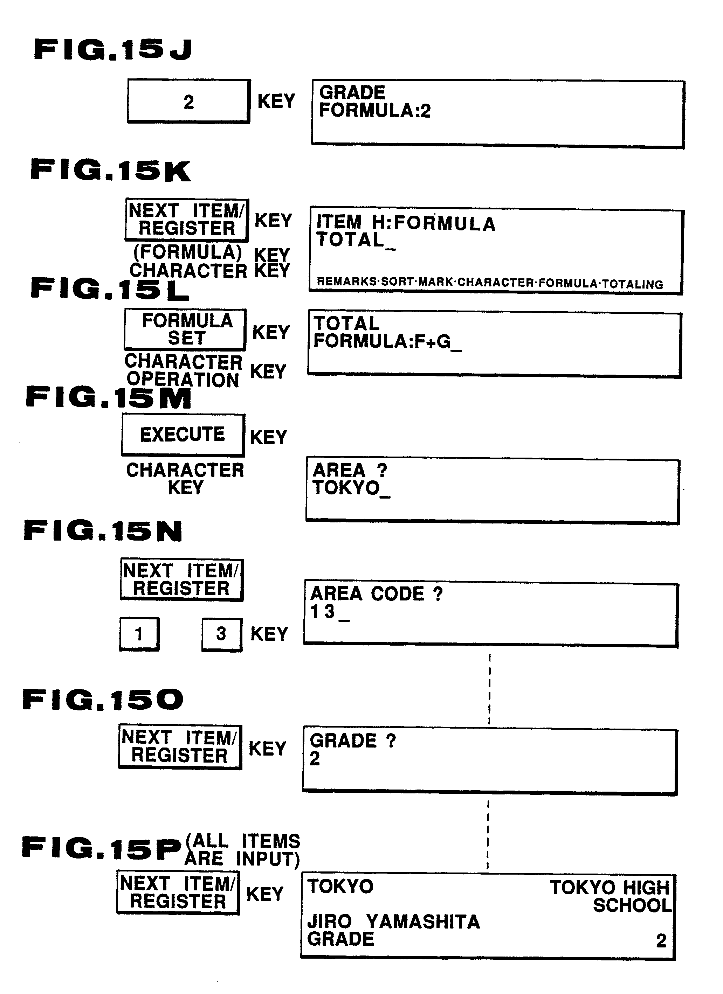

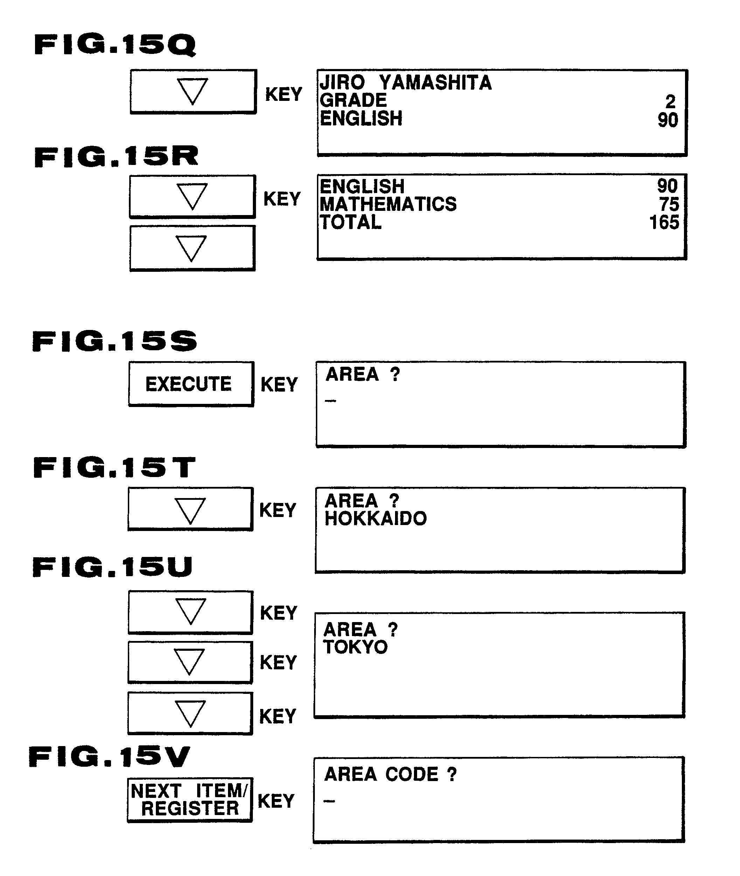

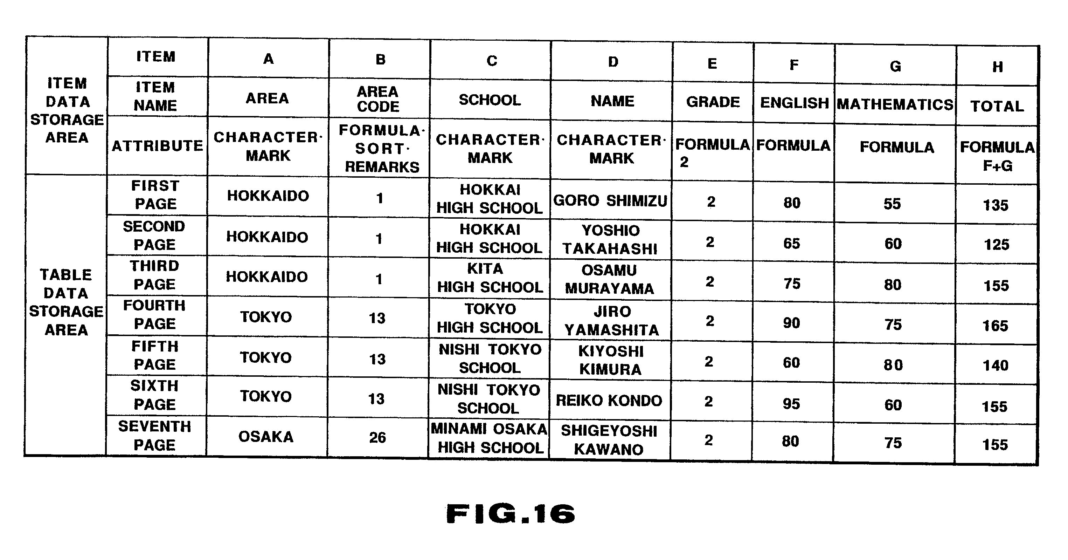

Figs. 15A to 15V respectively show key operations during table formation and corresponding display states. Fig. 16 shows a table as an example. Fig. 16 shows a list of student's records obtained by performing a trial examination in two subjects "English" and "Mathematics" for students in the second grade of high schools (seven schools) in Hokkaido, Tokyo, and Osaka. As area codes, "1", "13", and "26" are respectively set for Hokkaido, Tokyo, and Osaka. In addition, Fig. 16 shows a result obtained by performing sort processing in the order in which area codes are increased in value. Furthermore, in the table shown in Fig. 16, after this sort processing, a summarizing operation is performed for the data of the same high school within the preset sort range. Moreover, in the table shown in Fig. 16, "remarks" is set in the item of "area code", and "mark" is set in the items of "area", "school", and "name".

Similar to the above-described table formation, a table name, and the attribute data and item name of each item are input, as shown in Figs. 15A to 15L, and are respectively stored in the table index storage area 31 and the item data storage area 32.

Data input for each item is performed in the same manner as in the data input of the above-described table in accordance with Figs. 15M to 15O and the flow chart shown in Fig. 6.

In an item E of this table, as shown in Figs. 15G to 15J, "formula" is set as attribute data. In addition, "2" is set as "formula". Therefore, when data for the item E is to be input, the flow in Fig. 6 advances as A2 → A3 → A5, and it is checked in step A19 whether "formula" is an arithmetic expression or a numeric value. In Fig. 16, since "formula" of "item E" is a numeric value, the flow advances to step A20. In step A20, an item name "grade" and a numeric value "2" with respect to "item E" are read out from the table data memory 15 into the display data memory 19, thus displaying "grade?" and "2" on the display section 20, as shown in Fig. 15O. In step A21, the numeric value "2" is transferred to the input/edition data memory 14. In this state, the control section 11 is kept waiting for an operation of the "next item/register" key (step A22).

Since the display of the numeric value "2" indicating the grade of students need not be changed, a user operates the "next item/register" key in the same state so as to shift the flow to processing for the next item.

When processing for the last item "item H" is completed, it is determined in step A25 that no next item is present. The flow then advances to step A27 to write the data held in the input/edition data memory 14 in the table data memory 15. Display processing A30 is performed in accordance with the data stored in the table data memory 15.

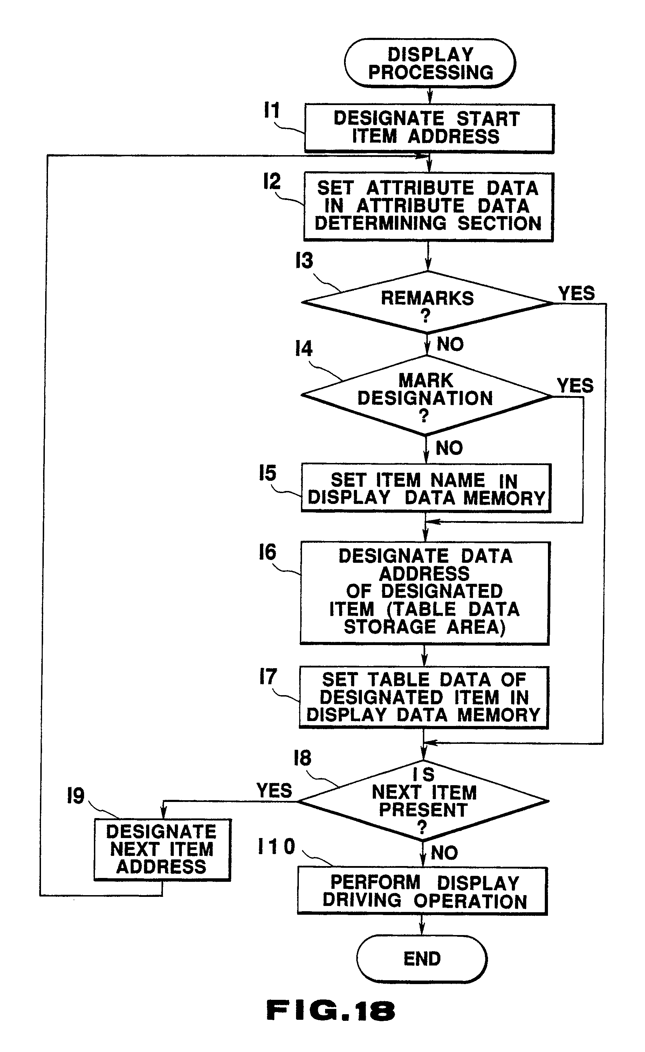

This display processing A30 is performed in accordance with a flow chart shown in Fig. 18. The address of the start item A is designated (step I1), and the corresponding attribute data is read in the attribute data determining section 17 (step I2). It is then checked whether the attribute data is "remarks" for inhibiting output of an item name set in a designated item and data input to the item (steps I2 and I3). If the attribute data is not "remarks", it is further checked whether the other output inhibition command, i.e., "mark" for inhibiting output of an item name set for a designated item is designated (step I4). If "mark" is not designated, the item name is output to the display data memory 19 (step I5), and address designation of the designated item data (the table data storage area 33) is performed (step I6).

If YES in step I4, processing in step I6 is performed without performing processing in step I5, i.e., reading out of the item name. In this instance, since "mark" is designated, the processing in step I6 is executed without transferring the item name "area" to the display data memory 19. That is, if "mark" is set as attribute data, display of an item name set in the corresponding item is inhibited.

Data "Tokyo" for the designated item is read out from the table data memory 15 and is output to the display data memory 19. Thereafter, it is checked whether the next item is present (step I8). If the next item is present, the address of the next item is designated, and the flow returns to step I2.

Since "remarks" is set in the item B as attribute data, YES is obtained in step I3. Therefore, in this instance, the flow immediately advances to step I8 without performing processing in steps I4 to I7.

Subsequently, the processing from the items A to H is performed in the same manner as described above, and the corresponding item names and data are transferred to the display data memory 19. When the processing for all the items is completed, the display section 20 is driven in accordance with the contents stored in the display data memory 19. In this instance, since the display section 20 has a small display capacity, all the data stored in the display data memory 19 cannot be displayed at once. Therefore, as shown in Fig. 15P, an area, a school, a name, and a grade are displayed first. If the cursor key ▽ for indicating the next item is operated in this state, an item name "English" and table data "90" for "item F" are read out from the display data memory 19 and are displayed. If the cursor key V is further operated, an item name "Mathematics" and table data "75" for "item G", and an item name "totaling" and table data "165" indicating a total value for "item H" are read out from the table data memory 15 and are displayed (Fig. 15Q).

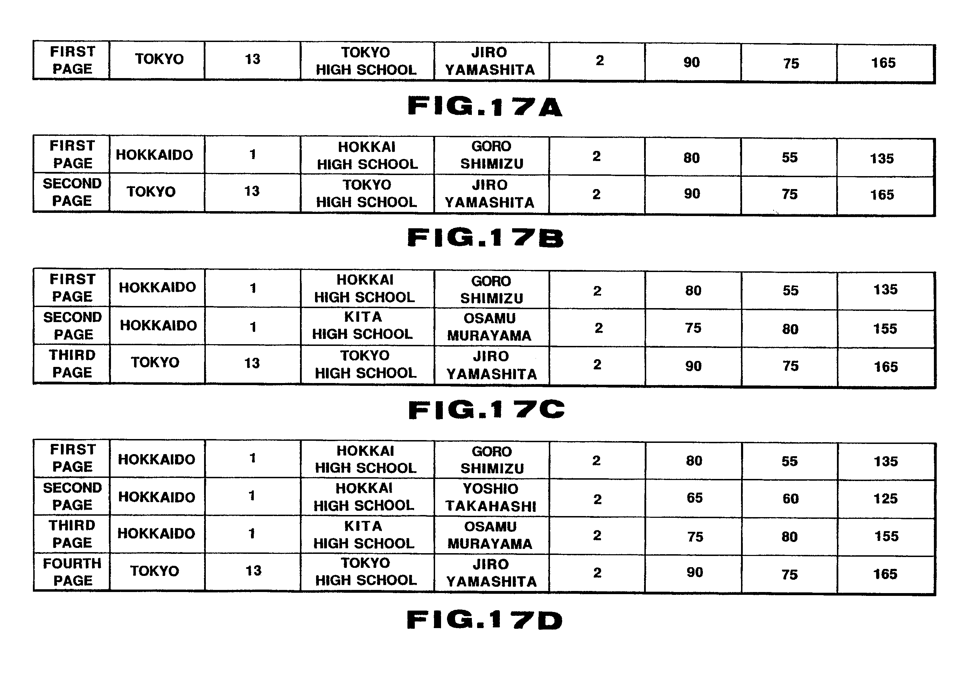

Data input is performed in accordance with the flow chart shown in Fig. 6 as described above, and the input data is temporarily stored in the input/edition data memory 14. When data input corresponding one page is completed, i.e., data for the first item A to the last item H are input, the data temporarily stored in the input/edition data memory 14 are registered in the table data memory 15 in step A27 shown in Fig. 6 in the same manner as in the above-described table forming operation. The data registration processing from the input/edition data memory 14 to the table data memory 15 is performed in accordance with the flow chart shown in Fig. 12. In this registration processing, as shown in Figs. 17A to 17D, sorting processing and summarizing in units of schools are performed.

If, for example, data for the third page is input as shown in Fig. 17C, and data of the Hokkai high school in Hokkaido is subsequently input, input and registration processing operations are performed in the same manner as described above. As a result, as shown in Fig. 17D, the data of the Hokkai high school in Hokkaido is located above the data of the Tokyo high school in Tokyo upon sorting based on the area codes. In addition, page summarizing based on the data in the item C in which no sort designation is performed and the attribute data "character" is set are performed. That is, the data of the same high school are summarized within the same prefecture, and the data of the Hokkai high school is registered above the data of the Kita high school in Hokkaido. If students having the same name are present in the same high school, a summarizing operation is performed within the range of the school.

More specifically, assume that data of the Hokkai high school in Hokkaido is input to the fourth page. If the item C is designated after sort processing is completed in the registration processing in Fig. 12, table data "Hokkai high school" is input to the operating/comparing section 18 in step G20. In step G21, the presence/absence of a previous page (second page) with respect to the designated address is checked. In this instance, YES is obtained in step G21, and the flow advances to step G22. In step G22, it is checked whether the address of the previous page is larger than an address stored in the upper limit address memory 23b. That is, it is checked whether the previous page falls within the sort range of Hokkaido. If YES in step G22, the table data of the designated item of the previous page is subjected to address designation (step G23). The table data "Kita high school" of the designated item C is input to the operating/comparing section 18 so as to be compared with the input data "Hokkai high school" (step G25). In this instance, since they do not coincide with each other, the flow returns to step G21. At this time, the page designation address is decremented by one, and the presence/absence of a previous page (first page) with respect to this page designation address is checked in step G21. At the same time, it is checked whether the address of this first page is larger than the address stored in the upper limit address memory 23b (step G22). In this instance, since the address of the first page is stored in the upper limit address memory 23b, YES is obtained in step G22. In step G23, the address of the first page of the item C is designated, and the table data "Hokkai high school" is read in the operating/comparing section 18 (step G24). The table data is then compared with the input data "Hokkai high school" (step G25). As a result, a coincidence signal is output from the operating/comparing section 18, and the end address of the designated page (second page) is written in the insertion address memory 23a in step G26. In addition, the start address of the designated page is written in the upper limit address memory 23b (step G35). In the above-described manner, the data of the same school are summarized.

Subsequently, in step G30, the presence/absence of a previous page (first page) with respect to the designated address is checked. In this instance, YES is obtained in step G30, and the flow advances to step G31. In step G31, it is checked whether the address of the previous page is larger than the address stored in the high limit address memory 23b. That is, it is checked whether the page falls within the range of the Hokkai high school. If YES in step G31, the table data of the designated item of the previous page is subjected to address designation (step G32). The table data "Hokkai high school" of the designated item C is then input to the operating/comparing section 18 (step G33). It is checked whether the table data coincides with the input data "Hokkai high school" (step G34). If they coincide with each other, the start address of the designated page is written in the upper limit address memory 23b (step G35), and the flow subsequently returns to step G30. At this time, the page designation address is decremented by one, and the operations in step G30 and the subsequent steps are repeated. With this processing, the start addresses of the designated pages of the same high school are set in the upper limit address memory 23b.

If it is determined in step G30 that no previous page is present, and NO is obtained in step G31 or G34, the flow returns to step G27 to check the presence/absence of the next data. In step G29, the address of the next item D is designated. The flow further advances to step G20 through steps G17, G18, and G19 so as to perform a summarizing operation for the data of "student" in the same manner as described above.

If it is determined in step G27 that no next data is present, the flow advances to step G28 to transfer the data stored in the input/edition data memory 14 to the table data memory 15 and to write the data in the table data storage area 33 in accordance with the address stored in the insertion address memory 23a.

In the above-described data input processing, data already registered in the table data memory 15 can be used. Assume, for example, that data input is completed up to the fourth page, and data of "Nishi Tokyo school" of "Tokyo" is to be input to the fifth page. If the "execute" key is operated after data input to the fourth page is completed, input processing shown in the flow chart in Figs. 6A and 6B is performed. The address of the start item A is designated first (step A1). The corresponding attribute data is then read in the attribute data determining section 17 (step A2). The flow advances to step A4 through step A3 so as to read the item name "area" in the display data memory 19 and to display "area?" on the display section 20 (Fig. 15S). The control section 11 then waits for key input (step A6). If the cursor key ∇ is operated in this state, this operation is detected in step A7, and the flow advances to step A11. In step A11, the table address of the designated item A of the start page is designated. The presence/absence of data is then checked (step A12). Since data is stored in the item A of the first page, the stored data "Hokkaido" is read in the input buffer 13 and the display data memory 19 (steps A13 and A14), and is displayed on the display section 20 (Fig. 15T). If it is determined in step A12 that no data is present, display data "no data" is supplied to the display data memory 19 and is displayed on the display section 20 (step A15). The control section 11 waits for the next key input in the above display state (step A16).

When "Hokkaido" is displayed on the display section 20, if this displayed data is to be input, the "next item/register" key is operated. Otherwise, the cursor key ∇ is operated. In case of an operation error, the "cancel" key is operated. These key operations are discriminated in step A17. If the "next item/register" key is operated, the operation in step A9 is performed. If the cursor key ∇ is operated, the operation in step A18 is performed. If the "cancel" key is operated, the flow returns to step A6 to prepare for the next key input. In step A18, the table data address of a designated item of the next or previous page is designated in accordance with a cursor key operation. In particular, if the upward cursor key △ is operated, the table data address of the designated item of the previous page is designated. If the downward cursor key ∇ is operated, the table data address of the designated item of the next page is designated. Assume that "Tokyo" is to be input. The cursor key ∇ is operated. With this operation, the table data address of the designated item of the next page is designated. Thereafter, the processing in step A12 and the subsequent steps is repeated to display the area "Hokkaido" of the second page on the display section 20. In addition, by operating the cursor key ∇ twice, the area "Tokyo" stored in the fourth page is read in the input buffer 13 and the display data memory 19 and is displayed on the display section 20 (Fig. 15U).

If the "next item/register" key is operated in this state, the data "Tokyo" held in the input buffer 13 is transferred to the input/edition data memory 14 (step A9). With this operation, data input of the area "Tokyo" is completed.

Subsequently, the item name "area code" of the next item B is read in the display data memory 19 and "area code?" for guiding an input operation is displayed on the display section 20 (Fig. 15V) by the processing in steps A25 → A26 → A2 → A3 → A5 → A4. As described above, when the same data as data to be input has already been registered, data input can be performed by using the registered data.

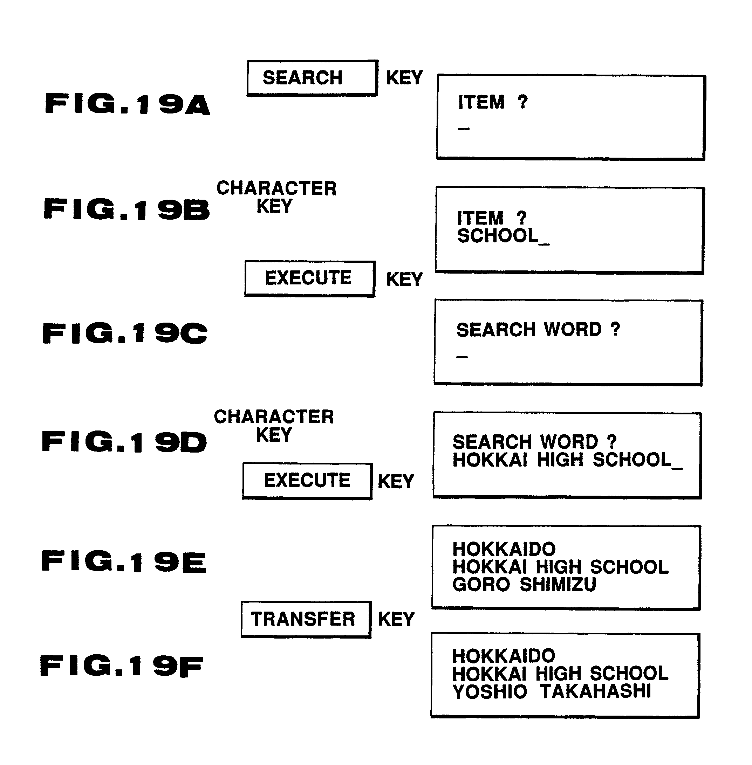

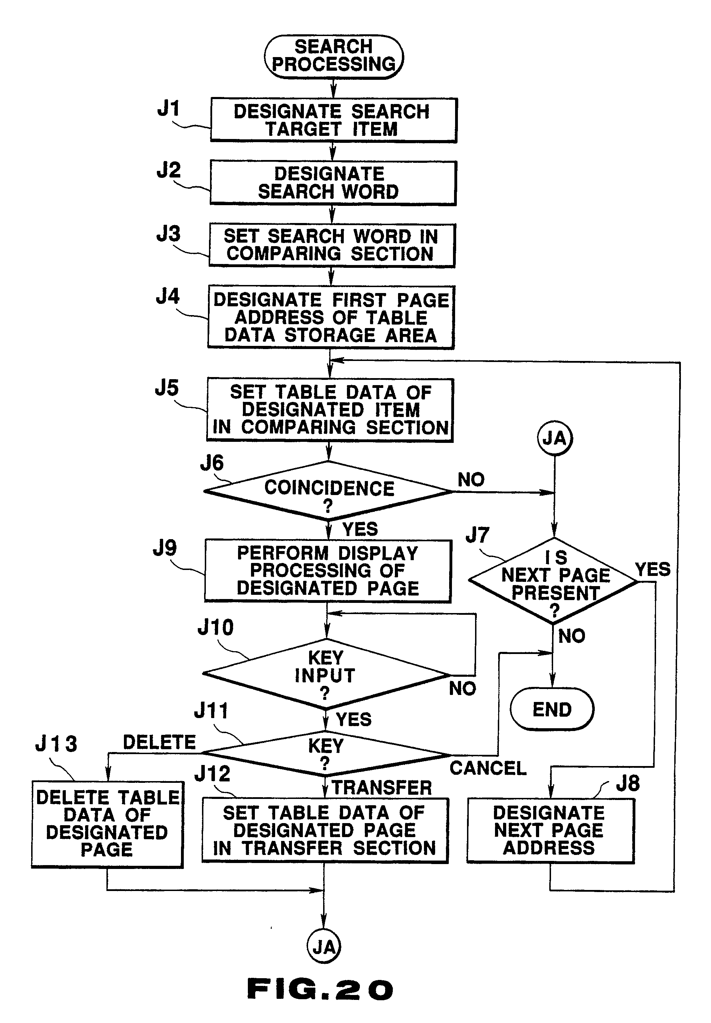

An operation of searching specific data of the table data registered in the above-described manner will be described below with reference to Figs. 19A to 19F. Figs. 19A to 19F show key operations and corresponding display states. Fig. 20 is a flow chart of search processing.

When search processing is to be performed, the "search" key of the key input section 12 is operated to designate a search mode, as shown in Fig. 19A. With this operation of the "search" key, the control section 11 starts a search control operation shown in the flow chart in Fig. 20, and performs search item designation in the first place (step J1). That is, the control section 11 displays "item?" on the display section 20 so as to guide input of an item to be searched. A user inputs the name of a search target item by operating the character keys in accordance with this guidance. If, for example, "item C" is a target item, the corresponding item name "school" is input. This input data is supplied to the display data memory 19 through the input buffer 13 and is displayed on the display section 20 (Fig. 19B). In addition, the key input "school" is held in the register in the control section 11.

After the item name is input, the "execute" key is operated. Upon this key operation, search word designation is performed (step J2), and "search word?" is displayed on the display section 20 as a guide display (Fig. 19C). If, for example, "Hokkai high school" is input as a search word in accordance with this guide display, this input data is supplied from the control section 11 to the display data memory 19 and is displayed on the display section 20 (Fig. 19D). If the "execute" key is operated after the search word is input, the search word "Hokkai high school" is supplied to the operating/comparing section 18 and is held in the internal register (step J3).

Subsequently, the control section 11 designates the first page address of the table data storage area 33 with respect to the display data memory 15 (step J4), and reads out the table data of the designated item in the operating/comparing section 18 so as to compare it with the search word "Hokkai high school" held in the internal register (steps J5 and J6). If they do not coincide with each other, the presence/absence of the next page is checked (step J7). If the next page is present, the next page address is designated (step J8), and the flow returns to step J5. In this instance, "Hokkaido" identical to the search word is read out from the first page of the item C as table data. Consequently, YES is obtained in step J6, and the flow advances to step J9 to perform designated page display processing. That is, the registered data of the first page from the table data storage area 33 of the table data memory 15 is written in the display data memory 19. Subsequently, the table data of, e.g., the items A, C, and D are read out from the display data memory 19 and are displayed in accordance with the display capacity of the display section 20 (Fig. 19E). In this state, the control section 11 waits for the next key input (step J10). When the remaining table data is to be checked, the corresponding cursor key is operated to read out the next data from the display data memory 19 and display it on the display section 20.

If the search processing is to be completed in the above-mentioned display state, the "cancel" key is operated. If the searched table data is to be transferred to a printer or another data processor, the "transfer" key is operated. If the searched table data is to be deleted, the "delete" key is operated. If the "transfer" key is operated, the table data of the designated page, i.e., the searched table data, is read out from the table data memory 15 into a transfer section 21, and is transferred from the key input section 12 to a printer, a personal computer, or the like (step J12). If the "delete" key is operated, delete processing of the table data of the designated page is performed with respect to the table data memory (step J13).

When the processing in step J12 or J13 is completed, the presence/absence of the next page is checked in step J7. In this case, since the next page is present, the next page address is designated in step J8, and the flow returns to step J5. Subsequently, the above-described processing is repeated to search the table data "Hokkai high school" of the second page in the item C. In step J9, the data of the second page is read in the display data memory 19 and is displayed on the display section 20, as shown in Fig. 19F.

When search processing is performed up to the last page in the same manner as described above, and it is determined in step J7 that no last page is present, the search processing is completed.

## Claims

1. A data processing apparatus comprising:
item setting means (11, 12, 13) for setting a plurality of items;
attribution data assigning means (11, 12, 13) for assigning attribution data with respect to the items set by said item setting means;
first storage means (15) for storing the attribution data assigned by said attribution data assigning means;

data input means (11, 12, 13) for inputting data with respect to the items set by said item setting means;

processing means (11) for processing the data input by said data input means, in response to the attribution data stored in said first storage means, so as to produce a set of data with respect to the whole items set by said item setting means; and

second storage means (15) for storing a plurality of sets of data produced by said processing means.

2. The data processing apparatus of claim 1, characterized in that said attribution data assigning means (11, 12, 13) includes arithmetic expression assigning means for assigning arithmetic expression with respect to an item set by said item setting means;

said first storage means (15) includes means for storing the arithmetic expression assigned by said arithmetic expression assigning means;

said processing means (11) includes arithmetic means for performing an arithmetic operation defined by the arithmetic expression stored in said first storage means; and

determining means (11) for determining a result obtained by said arithmetic means as data with respect to the item to which the arithmetic expression is assigned by said arithmetic expression assigning means.

3. The data processing apparatus of claim 2, further comprising:

input requesting means (11, 20) for requesting the inputting of the data from said input means, with respect to the item to which the arithmetic expression is not assigned by said arithmetic expression assigning means.

4. The data processing apparatus of claim 1, characterized in that said attribution data assigning means (11, 12) includes output inhibiting data assigning means for assigning output inhibiting data with respect to an item set by said item setting means; and which further comprises:

output means (11, 20) for outputting the data from said second storage means;

output inhibiting means (11, 17) for inhibiting the outputting of the data with respect to the item to which the output inhibiting data is assigned by said output inhibiting data assigning means; and

display means (20) for displaying the data output from said second storage means by said output means.

5. The data processing apparatus of claim 4, characterized in that said item setting means (11, 12) includes item name setting means for setting item name of the items;

said first storage means (15) includes means (32) for storing the item name set by said item setting means;

said output means (11, 19, 20) includes item name output means for outputting the item name from said first storage means; and

said output inhibiting means includes item name output inhibiting means (11, 17) for inhibiting the outputting of the item name with respect to the item to which the output inhibiting data is assigned by said output inhibiting data assigning means.

6. The data processing apparatus of claim 1, characterized in that said item setting means (11, 12) includes item name setting means for setting item name of the items;

said first storage means (15) includes means (32) for storing the item name set by said item name setting means; and

said attribution data assigning means (11, 12) includes output inhibiting data assigning means for assigning output inhibiting data with respect to an item set by said item setting means; and which further comprises:

input requesting means (11, 20) for requesting the inputting of the data from said input means, with respect to the items set by said item setting means;

output requesting means (11, 12) for requesting the outputting of the data from said second storage means;

output means (11, 19, 20) for outputting the item name from said first storage means when said input requesting means requests the inputting of the data from said input means, and for outputting the item name from said first storage means and the data from said second storage means when said output requesting means requests the outputting of the data from said second storage means;

output inhibiting means (11, 17) for inhibiting the outputting of the item name of the item to which the output inhibiting data is assigned by said output inhibiting data designating means, when said output requesting means requests the outputting of the data from said second storage means; and

display means (11, 19, 20) for displaying the item name output from said first storage means and the data output from said second storage means, by said output means.

7. The data processing apparatus of claim 1, characterized in that said attribution data assigning means (11, 12) includes letter-attribution data assigning means for assigning letter-attribution data with respect to an item set by said item setting means; and

said processing means (11) includes first sorting means for sorting the set of the data to be stored in said second storage means, based on the data with respect to the item to which the letter-attribution data is assigned by said letter-attribution data assigning means, so that the identical data items of the sets of the data stored in said second storage means are arranged with respect to the item to which the letter-attribution data is assigned.

8. The data processing apparatus of claim 7, characterized in that said attribution data assigning means (11, 12) includes sorting-designation data assigning means for assigning sorting-designating data with respect to an item to which the letter-attribution data is assigned by said letter-attribution data assigning means; and said processing means (11) includes second storing means for storing the set of the data to be stored in said second storage means based on the data with respect to the item to which the sorting-designating data is assigned by said sorting-designating data assigning means, so that the sets of the data stored in said second storage means is arranged in predetermined order.

9. The data processing apparatus of claim 8, characterized in that said attribution data assigning means (11, 12) includes numeral-attribution data assigning means for assigning numeral-attribution data with respect to an item set by said item setting means; and total-designation data assigning means (11, 12) for assigning total-designating data with respect to the items to which the numeral-attribution data is assigning by said numeral-attribution data assigning means; and said processing means (11) includes first total-arithmetic means for performing the arithmetic total of the data with respect to the item to which the numeral-attribution data is assigned by said numeral-attribution data assigning means and the total-designation data by said total-designation data assigning means.

10. The data processing apparatus of claim 9, characterized in that said second storage means (15) includes means (33b) for storing the total obtained by said first total-arithmetic means.

11. The data processing apparatus of claim 9, characterized in that said total-designation data assigning means (11, 15) includes means for assigning the total-designation data with respect to the item to which the letter-attribution data is assigned by said letter-attribution data assigning means; and said processing means (11) includes second total-arithmetic means for performing the arithmetic total of the data with respect to the item to which the numeral-attribution data is assigned by said numeral-attribution data assigning means and to which the total-designation data is assigned by said total-designation data assigning means, said data subjected to the arithmetic total being concerned with the same data with respect to the item to which the letter-attribution data is assigned by said letter-attribution data assigning means and to which the total-designation data is assigned by said total-designation data assigning means.

12. The data processing apparatus of claim 11, characterized in that said second storage means (15) includes means (33b) for storing a set of the total obtained by said second total-arithmetic means and the data with respect to the item to which the letter-attribution data is assigned by said letter-attribution data assigning means and to which the total-designation data is assigned by said total-assigning data assigning means.

13. The data processing apparatus of claim 1, characterized in that said attribution data assigning means includes numeral-attribution data assigning means (11) for assigning numeral-attribution data with respect to an item set by said item setting means, and total-designation data assigning means (11, 12) for assigning total-designation data with respect to the items to which the numeral-attribution data is assigned by said numeral-attribution data assigning means; and said processing means (11) includes first total-arithmetic means for performing the arithmetic total of the data with respect to the item to which the numeral-attribution data is assigned by said numeral-attribution data assigning means and to which the total-designation data is assigned by said total-designation data assigning means.

14. The data processing apparatus of claim 13, characterized in that said second storage means (15) includes means (33b) for storing the total obtained by said second total-arithmetic means.

15. The data processing apparatus of claim 13, characterized in that said total-designation data assigning means (11, 12) includes means for assigning the total-designation data with respect to the item to which the letter-attribution data is assigned by said letter-attribution data assigning means; and said processing means (11) includes second total-arithmetic means for performing the arithmetic total of the data with respect to the item to which the numeral-attribution data is assigned by said numeral-attribution data assigning means and to which the total-designation data is assigned by said total-designation data assigning means, said data subjected to the arithmetic total being concerned with the same data with respect to the item to which the letter-attribution data is assigned by said letter-attribution data assigning means and to which the total-designating data is assigned by said total-designation data assigning means.

16. The data processing apparatus of claim 15, characterized in that said second storage means (15) includes means (33b) for storing a set of the totals obtained by said second total-arithmetic means and for storing the data with respect to the item to which the letter-attribution data is assigned by said letter-attribution data assigning means and to which the total-assignion data is assigned by said total-assigning data assigning means.

17. The data processing apparatus of claim 1, characterized in that said item setting means (11, 12) includes item name setting means for setting item names of the items, and said first storage means (15) includes means (32) for storing the item name set by said item setting means, and which further comprises:

search-word input means (11, 12) for inputting the item name and the data;

searching means (11) for searching the data stored in said second storage means with respect to the item corresponding to the item name input by said search-word input means in response to the data input by said search-word input means; and

output means (11, 20) for outputting the set of the data from said second storage means, which includes the data searched by said searching means.

18. The data processing apparatus of claim 1, characterized in that said input means (11, 12) includes first specific key and second specific key, and which further comprises:

input requesting means (11, 20) for requesting the inputting of the data with respect to one of the items set by said item setting means;

output means (11, 20) for sequentially outputting the data stored in said second storage means with respect to the item about which the inputting of the data is requested by said input requiring means, every time the first specific key is operated; and

input determining means (11, 17) for determining the data output from said second storage means by said output means as input data with respect to item about which the inputting of the data is requested by said input requiring means, when said second specific key is operated.

19. The data processing apparatus of claim 1, characterized by further comprising:

item eliminating means (11) for eliminating the item set by said item setting means, and in which said processing means (11) includes, data eliminating means for eliminating the data stored in said second storage means with respect to the item eliminated by said item eliminated means.

20. The data processing apparatus of claim 19, characterized in that said item setting means (11, 12) includes means for setting symbol to the items;

said attribution data assigning means (11, 12) includes arithmetic expression assigning means for assigning an arithmetic expression which has the symbol set by said item setting means as a variable with respect to an item set by said item setting means;

said first storage means (15) includes means for storing the arithmetic expression assigned by said attribution data designating means;

said processing means (11) includes arithmetic means for performing an arithmetic operation based on the arithmetic expression stored in said first storage means; and

determining means (11) for determining a result obtained by said processing means as data with respect to the item to which the arithmetic expression is assigned by said arithmetic expression assigning means;

said apparatus further comprising:

symbol changing means (11, 12) for changing the symbol which is set with respect to the item by said item setting means and which is included in the arithmetic expression assigned by said arithmetic expression assigning means, in response to an elimination of the item by said item eliminating means.

21. The data processing apparatus of claim 1, characterized in that said item setting means (11, 12) includes means for setting a symbol to the items;

said attribution data assigning means (11, 12) includes arithmetic expression assigning means for assigning arithmetic expression which has the symbol set by said item setting means as a variable with respect to an item set by said item setting means;

said first storage means (15) includes means for storing the arithmetic expression assigned by said attribution data assigning means;

said processing means (11) includes arithmetic means for performing an arithmetic operation based on the arithmetic expression stored in said first storage means; and

determining means (11) for determining a result obtained by said processing means as data with respect to the item to which the arithmetic expression is assigned by said arithmetic expression assigning means;

said apparatus further comprising:

item order changing means (11) for changing item order which has been set by said item setting means;

data order changing means for changing data order stored in said second storage means in response to the item order changed by said item order changing means; and

symbol changing means for changing the symbol which is set with respect to the item by said item setting means and which is included in the arithmetic expression assigned by said arithmetic expression assigning means, in response to the item order changed by said item order changing means.

22. The data processing apparatus of claim 1, characterized in that said item setting means (11, 12) includes new item setting means for setting new item;

said attribution data assigning means (11, 12) includes means for assigning attribution data with respect to the new item set by said new item setting means;

said first storage means (15) includes means for storing the attribution data which is assigned with respect to the new item set by said new item setting means by said attribution data assigning means;

said data input means includes means for inputting data with respect to the new item set by said new item setting means; and

said processing means includes data inserting means for inserting the data input from said data input means to said second storage means.

23. The data processing apparatus of claim 22, characterized in that said item setting means (11, 12) includes for setting symbols to the items;

said attribution data assigning means (11, 12) includes arithmetic expression assigning means for assigning an arithmetic expression which has the symbols set by said item setting means as a variable with respect to an item set by said item setting means;

said first storage means (15) includes means for storing the arithmetic expression assigned by said attribution data assigned means;

said processing means (11) includes arithmetic means for performing an arithmetic operation defined by the arithmetic expression stored in said first storage means; and

determining means (11, 17) for determining a result obtained by said processing means as data with respect to the item to which the formula is assigned by said formula assigning means;

said apparatus further comprising:

item order changing means (11) for changing item order which has been set by said item setting means in response to the new item set by said new item setting means;

data order changing means (11) for changing data order stored in said second storage means in response to the item order changed by said item order changing means; and

symbol changing means (11) for changing the symbol which is set with respect to the item by said item setting means and which is included in the arithmetic expression assigned by said arithmetic expression assigning means, in response to the item order changed by said item order changing means.

24. The data processing apparatus of claim 1, characterized in that said attribution data assigning means includes arithmetic expression assigning means (11, 12) for assigning arithmetic expression with respect to an item set by said item setting means, the arithmetic expression having a variable determined by the data with respect to other item set by said item setting means;

said processing means (11) includes arithmetic means for performing arithmetic operation defined by the arithmetic expression assigned by said arithmetic expression assigning means;

determining means for determining a result obtained by said arithmetic means as data with respect to the item to which the arithmetic expression is assigned by said arithmetic expression designating means;

detecting means (11, 17) for detecting whether or not said arithmetic means is able to obtain results in accordance with the arithmetic expression assigned by said arithmetic expression assigned means;

judging means for judging the number of the items to which the arithmetic expression about which detecting means detects that results are not able to be obtained are assigned; and

control means (11) for repeatedly activating said arithmetic means, so that the arithmetic means performs the arithmetic operations in accordance with the arithmetic expressions until the number of the items judged by said judging means is not changed, when said detecting means detects that the arithmetic means is unable to obtain results in accordance with the arithmetic expressions assigned by said arithmetic expression assigning means.

**FIG.1**

18 OPERATION/ COMPARING SECTION

17 ATTRIBUTE DATA DETERMINING SECTION

23a INSERTION ADDRESS MEMORY 22

23b UPPER LIMIT ADDRESS MEMORY

23c TOTALING START ADDRESS MEMORY

23d ARITHMETIC PAGE ADDRESS MEMORY

23e REGISTRATION ADDRESS MEMORY

20 DISPLAY SECTION

CONTROL

CONTROL

CONTROL SECTION

11

DATA

DATA

19 DISPLAY DATA MEMORY

ADDRESS

DATA

DATA

ADDRESS CONTROL SECTION

16

15 TABLE DATA MEMORY

14 INPUT/EDITION DATA MEMORY

INPUT BUFFER

13

12 KEY INPUT SECTION

21a NON-ARITHMETIC FLAG COUNTER

TOTAL DATA PAGE COUNTER

21b TOTAL DATA CODE COUNTER

21c

21

EP 0 410 452 A2

| | |
|---|---|
| TABLE NAME (CHARACTER CODE) | |
| END CODE | 31 TABLE INDEX STORAGE AREA |
| ITEM A | |
| ATTRIBUTE DATA | |
| ITEM NAME (CHARACTER CODE) | |
| END CODE | 32 ITEM DATA STORAGE AREA |
| ITEM B | |
| ATTRIBUTE DATA | |
| ITEM NAME (CHARACTER CODE) | |
| END CODE | |
| ⋮ | |
| ITEM STORAGE END CODE | |
| ITEM A DATA | |
| END CODE | 33a |
| ITEM B DATA | |
| END CODE | |
| ⋮ | |
| PAGE END CODE | |
| ⋮ | TABLE DATA 33 TABLE DATA STORAGE AREA |
| PAGE END CODE | |
| TOTAL DATA PAGE IDENTIFICATION CODE | |
| TOTALING TARGET ITEM FLAG. | 33b |
| END CODE | |
| END CODE | TABLE DATA (TOTAL DATA PAGE) |
| END CODE | |
| END CODE | |
| ITEM D TOTAL DATA | |

15

| | 33 |
|---|---|
| END CODE | |
| ITEM E TOTAL DATA | |
| END CODE | 33b |
| ⋮ | |
| PAGE END CODE | |
| ITEM A DATA | TABLE DATA |
| ⋮ | |

# FIG. 2

22

# FIG. 3A

| TABLE MODE | KEY |
| INPUT MODE | KEY |
| EXECUTE | KEY |

CHARACTER KEY

| NEXT ITEM/ REGISTER | KEY |

```
TABLE NAME?
SALES DATA_
```

# FIG. 3B

```
ITEM A:

_

REMARKS·SORT·MARK·FORMULA·TOTALING·CHARACTER
```

# FIG. 3C

(CHARACTER) KEY
(SORT) KEY
(TOTAL) KEY

```
ITEM A:CHARACTER·
SORT·TOTALING
_

REMARKS·SORT·MARK·FORMULA·TOTALING·CHARACTER
```

# FIG. 3D

CHARACTER KEY

```
ITEM A:CHARACTER·
SORT·TOTALING
SECTION_

REMARKS·SORT·MARK·FORMULA·TOTALING·CHARACTER
```

| NEXT ITEM/ REGISTER | KEY |

```
ITEM B:

_

REMARKS·SORT·MARK·FORMULA·TOTALING·CHARACTER
```

# FIG. 3E

| NEXT ITEM/ REGISTER | KEY |

```
ITEM F:

_

REMARKS·SORT·MARK·FORMULA·TOTALING·CHARACTER
```

# FIG. 3F

# FIG. 3G

(FORMULA) KEY
CHARACTER KEY

```
ITEM F:FORMULA
SECTION SALES RATION_

REMARKS·SORT·MARK·FORMULA·TOTALING·CHARACTER
```

# FIG. 3H

| FORMULA SET | KEY |

CHARACTER· OPERATION KEY

| TOTAL DATA | KEY |

```
SECTION SALES RATION
FORMULA:(D+E)/(TOTAL
(TOTAL(D))+TOTAL
(TOTAL(E)))_
```

# FIG.3I

| EXECUTE | KEY

CHARACTER
KEY

SECTION ?
SECOND SECTION_

# FIG.3J

| NEXT ITEM/
REGISTER | KEY

AGENT NAME?

—

# FIG.3K (ALL ITEMS ARE INPUT)

| NEXT ITEM/
REGISTER | KEY

| SECTION | SECOND SECTION |
|---|---|
| AGENT NAME | C ELECTRIC COMPANY |
| DATE | 89.1 |

# FIG.3L

| ▽ | KEY

| AGENT NAME | C ELECTRIC COMPANY |
|---|---|
| DATE | 89.1 |
| SALES OF ARTICLES A | 300 |

# FIG.3M

| NEXT PAGE | KEY

| SECTION | SECOND SECTION |
|---|---|
| AGENT NAME | C ELECTRIC COMPANY |
| SALES OF ARTICLES A | TOTAL 300 |

# FIG.3N

| ▽ | KEY

| AGENT NAME | | C ELECTRIC COMPANY |
|---|---|---|
| SALES OF ARTICLES A | TOTAL | 300 |
| SALES OF ARTICLES B | TOTAL | 110 |

# FIG.3O

| NEXT PAGE | KEY

| SECTION | | SECOND SECTION |
|---|---|---|
| SALES OF ARTICLES A | TOTAL | 300 |
| SALES OF ARTICLES B | TOTAL | 110 |

# FIG.3P

| EXECUTE | KEY

SECTION ?
—

EP 0 410 452 A2

| | ITEM | A | B | C | D | E | F | G |
|---|---|---|---|---|---|---|---|---|
| ITEM DATA STORAGE AREA | ITEM NAME | SECTION | AGENT NAME | DATE | SALES OF ARTICLES A | SALES OF ARTICLES B | SECTION SALES RATIO | TOTAL SALES RATIO |
| | ATTRIBUTE | CHARACTER· SORT· TOTALING | CHARACTER· SORT· TOTALING | CHARACTER· SORT | FORMULA· TOTALING | FORMULA· TOTALING | (D+E)/ (TOTAL(TOTAL (D)) +TOTAL(TOTAL(E))) | (D+E)/(TOTAL(TOTAL (TOTAL(D)))+ (TOTAL(TOTAL(TOTAL (E)))) |
| TABLE DATA STORAGE AREA | FIRST PAGE | FIRST SECTION | A COMPANY | 89.1 | 100 | 90 | 0.28 | 0.14 |
| | SECOND PAGE | FIRST SECTION | A COMPANY | 89.2 | 150 | 40 | 0.28 | 0.14 |
| | THIRD PAGE | FIRST SECTION | A COMPANY | 89.3 | 80 | 60 | 0.20 | 0.10 |
| | TOTAL DATA PAGE | FIRST SECTION | A COMPANY | —— | 330 | 190 | —— | —— |
| | FOURTH PAGE | FIRST SECTION | B COMPANY | 89.1 | 50 | 45 | 0.14 | 0.07 |
| | FIFTH PAGE | FIRST SECTION | B COMPANY | 89.2 | 30 | 55 | 0.12 | 0.06 |
| | TOTAL DATA PAGE | FIRST SECTION | B COMPANY | —— | 80 | 90 | —— | —— |
| | TOTAL DATA PAGE | FIRST SECTION | —— | —— | 410 | 280 | —— | —— |
| | SIXTH PAGE | SECOND SECTION | C ELECTRIC COMPANY | 89.1 | 300 | 110 | 0.59 | 0.30 |
| | SEVENTH PAGE | SECOND SECTION | C ELECTRIC COMPANY | 89.3 | 160 | 120 | 0.41 | 0.20 |
| | TOTAL DATA PAGE | SECOND SECTION | C ELECTRIC COMPANY | —— | 460 | 230 | —— | —— |
| | TOTAL DATA PAGE | SECOND SECTION | —— | —— | 460 | 230 | —— | —— |
| | GRAND TOTAL DATA PAGE | —— | —— | —— | 870 | 510 | —— | —— |

**FIG.4**

**FIG. 5A**

| FIRST PAGE | SECOND SECTION | C ELECTRIC COMPANY | 89.1 | 300 | 110 | NON-OPERATION CODE | NON-OPERATION CODE |
|---|---|---|---|---|---|---|---|

**FIG. 5B**

| FIRST PAGE | SECOND SECTION | C ELECTRIC COMPANY | 89.1 | 300 | 110 | 1.00 | 1.00 |
|---|---|---|---|---|---|---|---|
| TOTAL DATA PAGE | SECOND SECTION | C ELECTRIC COMPANY | — | 300 | 110 | — | — |
| TOTAL DATA PAGE | SECOND SECTION | — | — | 300 | 110 | — | — |
| GRAND TOTAL DATA PAGE | — | — | — | 300 | 110 | — | — |

EP 0 410 452 A2

**FIG.5C**

| FIRST PAGE | FIRST SECTION | A COMPANY | 89.1 | 100 | 90 | 1.00 | 0.32 |
|---|---|---|---|---|---|---|---|
| TOTAL DATA PAGE | FIRST SECTION | A COMPANY | —— | 100 | 90 | —— | —— |
| TOTAL DATA PAGE | FIRST SECTION | —— | —— | 100 | 90 | —— | —— |
| SECOND PAGE | SECOND SECTION | C ELECTRIC COMPANY | 89.1 | 300 | 110 | 1.00 | 0.68 |
| TOTAL DATA PAGE | SECOND SECTION | C ELECTRIC COMPANY | —— | 300 | 110 | —— | —— |
| TOTAL DATA PAGE | SECOND SECTION | —— | —— | 300 | 110 | —— | —— |
| GRAND TOTAL DATA PAGE | —— | —— | —— | 400 | 200 | —— | —— |

**FIG.5D**

| FIRST PAGE | FIRST SECTION | A COMPANY | 89.1 | 100 | 90 | 0.40 | 0.24 |
|---|---|---|---|---|---|---|---|
| SECOND PAGE | FIRST SECTION | A COMPANY | 99.2 | 150 | 40 | 0.40 | 0.24 |
| TOTAL DATA PAGE | FIRST SECTION | A COMPANY | —— | 250 | 130 | —— | —— |
| TOTAL DATA PAGE | FIRST SECTION | —— | —— | 250 | 130 | —— | —— |
| THIRD PAGE | SECOND SECTION | C ELECTRIC COMPANY | 89.1 | 300 | 110 | 1.00 | 0.52 |
| TOTAL DATA PAGE | SECOND SECTION | C ELECTRIC COMPANY | —— | 300 | 110 | —— | —— |
| TOTAL DATA PAGE | SECOND SECTION | —— | —— | 300 | 110 | —— | —— |
| GRAND TOTAL DATA PAGE | —— | —— | —— | 550 | 240 | —— | —— |

EP 0 410 452 A2

FIG.6A

A4 — SET ITEM NAME IN DISPLAY DATA MEMORY

(AB)

A6 — KEY INPUT ?

NO

YES — A7

KEY? — A8

DATA

SET KEY INPUT DATA IN INPUT BUFFER

NEXT/ITEM REGISTRATION

SET DATA OF INPUT BUFFER IN INPUT/ EDITION DATA MEMORY

A9

(AA)

CURSOR — A11

DESIGNATE TABLE DATA ADDRESS OF DESIGNATED ITEM OF START PAGE

A12 — IS DATA PRESENT ? — NO

A15 — SET DISPLAY DATA "NO DATA" IN DISPLAY DATA MEMORY

YES — A13

SET TABLE DATA IN INPUT BUFFER (TABLE DATA STORAGE AREA)

A14

SET TABLE DATA(TABLE DATA STORAGE AREA) IN DISPLAY DATA MEMORY

A16 — KEY INPUT ? — NO

NEXT/ITEM REGISTRATION — YES — A17

CANCEL

KEY?

CURSOR — A18

DESIGNATE TABLE DATA ADDRESS OF DESIGNATED ITEM OF NEXT(PREVIOUS) PAGE

# FIG.6B

29

FIG.7

EP 0 410 452 A2

```
        ┌─────────────────────┐
        │   TOTAL  DATA  PAGE  │
        │  FORMING  OPERATION  │
        └─────────────────────┘
                  │
                  ▼
     ┌──────────────────────┐
     │ PERFORM GRAND TOTAL  │───C1
     │  DATA PAGE FORMING    │
     │     OPERATION         │
     └──────────────────────┘
                  │
                  ▼
     ┌──────────────────────┐
     │  DESIGNATE ADDRESS    │───C2
     │    OF  FIRST  ITEM    │
     └──────────────────────┘
                  │
                  ▼
     ┌──────────────────────┐
     │  SET ATTRIBUTE DATA   │
     │   IN ATTRIBUTE DATA   │───C3
     │ DETERMINING SECTION   │
     └──────────────────────┘
                  │
                  ▼
              ╱───────╲  C4
             ╱ CHARACTER ╲     NO
             ╲     ?     ╱──────────
              ╲───────╱
                  │ YES
                  ▼         C5
              ╱───────╲
             ╱ TOTALING ╲    NO
             ╲    ?     ╱──────
              ╲───────╱
                  │ YES
                  ▼
                ( CD )
```

```
                    ( CB )
                       │
                       ▼
                   ╱───────╲   C6
                  ╱ IS  NEXT ╲      YES
                  ╲ ITEM PRESENT ╱────────
                   ╲    ?    ╱
                    ╲──────╱
                       │ NO
                       ▼
                    ( END )
```

```
                          C7
              ┌──────────────────┐
              │ DESIGNATE NEXT   │
              │  ITEM ADDRESS    │
              └──────────────────┘
```

## FIG.8A

EP 0 410 452 A2

(CD) ──→ C8

DESIGNATE FIRST PAGE
ADDRESS OF DISPLAY
DATA STORAGE AREA

SET TABLE DATA OF ──C9
DESIGNATED ITEM IN
COMPARING SECTION

C10

SET START ADDRESS
OF DESIGNATED PAGE
IN TOTALING START
ADDRESS MEMORY

C11

SET END ADDRESS
OF DESIGNATED PAGE
IN INSERTION
ADDRESS MEMORY

C12

DESIGNATE NEXT
PAGE ADDRESS

C13

YES ── TOTAL
DATA PAGE
?

NO ── C14

SET TABLE DATA OF
DESIGNATED ITEM IN
COMPARING SECTION

C15

COINCIDENCE
?  ── NO

YES

(CC)

INSERT TOTAL DATA ── C21
PAGE IN TABLE DATA
STORAGE AREA(STORAGE
ADDRESS OF INSERTION
ADDRESS MEMORY)

SET TOTAL DATA ITEM ── C22
FLAG IN TABLE DATA
STORAGE AREA

(CA)

PERFORM TOTALING ── C23
PROCESSING

DESIGNATE NEXT
PAGE ADDRESS

C25 ── IS ── C24
NEXT PAGE
PRESENT  ── NO ──→ (CB)
?

C26 ── YES

NO ── TOTAL
DATA PAGE
?

C27 ── YES

GRAND
TOTAL DATA  ── NO
PAGE?

YES

(CB)

C16

SET TOTAL DATA
ITEM FLAG IN
COMPARING SECTION

SET DESIGNATED
ITEM IN COMPARING
SECTION

C17

YES

C18

COINCIDENCE
?

(CA)

NO ── C19

GRAND
TOTAL DATA  ── NO
PAGE?

YES

(CC)

**FIG.8B**

```
        ( TOTALING )
        ( PROCESSING )
              │
              ▼
   ┌──────────────────────┐
   │ DESIGNATE ADDRESS    │── D1
   │    OF START ITEM     │
   └──────────────────────┘
              │
              ▼
   ┌──────────────────────┐
   │ SET ATTRIBUTE DATA IN│
   │    ATTRIBUTE DATA     │── D2
   │ DETERMINING SECTION   │
   └──────────────────────┘
              │
              ▼        D3
          ╱FORMULA╲    NO
          ╲   ?   ╱─────────────┐
              │ YES             │
              ▼        D4       │
          ╱TOTALING╲   NO       │
          ╲   ?    ╱───────────┐│
              │ YES           ││
              ▼   D7          ││
   ┌──────────────────────┐   ││
   │ SET START ADDRESS    │   ││
   │ OF TOTAL DATA PAGE   │   ││
   │ IN COMPARING SECTION │   ││
   └──────────────────────┘   ││
              │   D8          ││
              ▼               ││
   ┌──────────────────────┐   ││
   │ DESIGNATE ADDRESS OF │   ││
   │ TABLE DATA STORAGE   │   ││
   │ AREA (STORAGE ADDRESS│   ││
   │ OF TOTALING START    │   ││
   │ ADDRESS MEMORY)      │   ││
   └──────────────────────┘   ││
```

D5
IS NEXT PAGE PRESENT ?   YES

D6
DESIGNATE NEXT ITEM ADDRESS

NO

END

```
              ▼   D9
   ┌──────────────────────┐
   │ SET TABLE DATA       │
   │ OF DESIGNATED ITEM   │
   │ IN OPERATION         │
   │ DATA MEMORY          │
   └──────────────────────┘
```

D15
SET OPERATION RESULT IN TOTAL DATA PAGE (DESIGNATED ITEM)

```
              ▼   D10
   ┌──────────────────────┐
   │ PERFORM ADDITION     │
   │    PROCESSING        │
   └──────────────────────┘
              │   D11
              ▼
   ┌──────────────────────┐
   │ SET NEXT PAGE        │
   │ ADDRESS IN           │
   │ COMPARING SECTION    │
   └──────────────────────┘
```

D13
DESIGNATE NEXT ADDRESS

```
              ▼   D12
          ╱COINCIDENCE╲  YES
          ╲    ?     ╱──────
              │ NO
```

D14
TOTAL DATA PAGE ?   YES ... NO

**FIG. 9**

**FIG.10**

**RETRIEVAL OF TOTAL DATA PAGE**

SET ARITHMETIC EXPRESSION IN OPERATION DATA MEMORY — F1

COUNT "TOTAL" CODES — F2

SET "TOTAL" CODE COUNT VALUE IN COMPARING SECTION — F3

DESIGNATE PAGE ADDRESS OF TABLE DATA STORAGE AREA — F4

F5 TOTAL DATA PAGE ? — NO

YES — F9

INCREMENT TOTAL DATA PAGE COUNTER BY ONE (OPERATION DATA MEMORY)

F10 SET DATA OF TOTAL DATA PAGE COUNTER IN COMPARING SECTION

F11 COINCIDENCE ? — NO

YES — F12

SET TABLE DATA OF DESIGNATED ITEM IN OPERATION DATA MEMORY

RESET TOTAL DATA PAGE COUNTER — F6

F7 IS NEXT PAGE PRESENT ? — YES

NO

END

F8 DESIGNATE NEXT PAGE ADDRESS

**FIG. 11**

FIG.12A

G16 — DESIGNATE START ITEM ADDRESS

(GA)

G29 — DESIGNATED NEXT ITEM ADDRESS

G17 — SET ATTRIBUTE DATA IN ATTRIBUTE DATA DETERMINING SECTION

G18 — CHARACTER ? —— NO

↓ YES

G19 — IS SORT DESIGNATION DATA PRESENT ? —— NO

↓ YES

G20 — SET TABLE DATA OF DESIGNATED ITEM (INPUT/EDITION DATA MEMORY) IN COMPARING SECTION

G27 — IS NEXT ITEM DATA PRESENT ? —— YES

↓ NO

G28 — SET DATA OF INPUT/ EDITION DATA MEMORY IN TABLE DATA STORAGE AREA (INSERTION ADDRESS MEMORY)

END

G21 — IS PREVIOUS PAGE (WITH RESPECT TO DESIGNATED ADDRESS/ INSERTION ADDRESS) PRESENT ? —— NO

↓ YES

G22 — PREVIOUS PAGE ADDRESS ≥ ADDRESS IN UPPER LIMIT ADDRESS MEMORY ? —— NO

↓ YES

G23 — DESIGNATE TABLE DATA ADDRESS OF DESIGNATED ITEM OF PREVIOUS PAGE

G24 — SET TABLE DATA OF DESIGNATED ITEM (TABLE DATA STORAGE AREA) IN COMPARING SECTION

G25 — INPUT DATA=TABLE DATA? —— NO

↓ YES

G26 — SET END ADDRESS OF DESIGNATED PAGE IN INSERTION ADDRESS MEMORY

G30 — IS PREVIOUS PAGE (WITH RESPECT TO DESIGNATED ADDRESS) PRESENT? —— NO

↓ YES

G31 — PREVIOUS PAGE ADDRESS ≥ ADDRESS IN UPPER LIMIT ADDRESS MEMORY —— NO

↓ YES

G32 — DESIGNATE TABLE DATA ADDRESS OF DESIGNATED ITEM OF PREVIOUS PAGE

G33 — SET TABLE DATA OF DESIGNATED ITEM (TABLE DATA STORAGE AREA) IN COMPARING SECTION

G34 — INPUT DATA=TABLE DATA ? —— NO

↓ YES

G35 — SET START ADDRESS OF DESIGNATED PAGE IN UPPER LIMIT ADDRESS MEMORY

**FIG.12B**

37

```
                    ┌─────────────────┐
                    │    EDITION      │
                    │   PROCESSING    │
                    └────────┬────────┘
                             │
         ┌───────────────────▼──────────────────┐
  H1 ────│   INPUT DATA OF ITEM DATA             │
         │   STORAGE AREA IN INPUT/              │
         │   EDITION DATA MEMORY                 │
         └───────────────────┬──────────────────┘
                             │
  H2 ───────                 ▼
     MOVE      ◆─────────  KEY ?  ─────────◆ INSERT
```

```
   H3                    H5      DELETE                     H7
 ┌──────────┐        ┌──────────────┐        ┌──────────────────────┐
 │   SET    │        │   DELETE     │        │ MOVE DESIGNATED      │
 │DESTINATION│       │  DESIGNATED  │        │ ITEM AND             │
 │   ITEM   │        │     ITEM     │        │ SUBSEQUENT ITEMS     │
 └────┬─────┘        └──────────────┘        └──────────────────────┘
      │             H6
 H4 ┌──────────────┐  ┌──────────────┐        ┌──────────────┐
    │   PERFORM    │  │  MOVE ITEMS  │        │ SET ITEM TO  │── H8
    │REARRANGEMENT │  │SUBSEQUENT TO │        │ BE INSERTED  │
    └──────────────┘  │DESIGNATED ITEM│       └──────────────┘
                      └──────────────┘
```

```
               ┌──────────────┐
        H9 ────│  FORM ITEM   │
               │  CONVERSION  │
               │    TABLE     │
               └──────┬───────┘
                      │
               ┌──────▼───────┐
       H10 ────│ DESIGNATE START │
               │ ITEM ADDRESS    │        (HB)
               └──────┬──────────┘
                      │
               ┌──────▼──────────┐
       H11 ────│ SET ATTRIBUTE DATA │
               │ IN ATTRIBUTE DATA  │
               │ DETERMINING SECTION│
               └──────┬─────────────┘
                      │
                      ▼               NO
       H12 ────◆  IS ARITHMETIC  ◆──────── (HA)
               ◆  EXPRESSION     ◆
               ◆  SET?           ◆
                      │ YES
               ┌──────▼──────────┐
       H13 ────│ SET VARIABLE ITEM │
               │ IN OPERATION DATA │
               │ MEMORY            │
               └──────┬────────────┘
               ┌──────▼────────────┐
       H14 ────│ PERFORM VARIABLE  │
               │ ITEM CONVERSION   │
               │ PROCESSING (REFER │
               │ TO VARIABLE       │
               │ CONVERSION TABLE) │
               └───────────────────┘
```

# FIG.13A

HA

H15 — IS NEXT ITEM PRESENT ? — NO

YES

H16 — SET NEXT ITEM ADDRESS

HB

H17 — SET DATA OF INPUT/ EDITION DATA MEMORY IN ITEM DATA STORAGE AREA

H18 — DESIGNATE PAGE ADDRESS OF TABLE DATA STORAGE AREA

HC

H24 — DELETE

YES — TOTAL DATA PAGE ? — H19

NO

H25 — IS NEXT PAGE PRESENT ?

NO

YES — H26

DESIGNATE NEXT PAGE ADDRESS

HC

END

H20 — SET DESIGNATED ADDRESS IN REGISTRATION ADDRESS MEMORY

H21 — SET TABLE DATA OF DESIGNATED PAGE IN INPUT/EDITION DATA MEMORY

H22 — REARRANGE TABLE DATA(REFER TO ITEM CONVERSION TABLE)

H23 — PERFORM REGISTRATION PROCESSING, TOTAL DATA PAGE FORMING OPERATION AND ARITHMETIC OPERATION 2 (REFER TO REGISTRATION ADDRESS MEMORY)

# FIG.13B

| ITEM | A | B | C | D | E |
|---|---|---|---|---|---|
| ITEM NAME | DATE | SECTION IN CHARGE | SALES OF ARTICLES A | SALES OF ARTICLES B | TOTAL SALES RATIO |
| ATTRIBUTE | CHARACTER· SORT· TOTALING· | CHARACTER· SORT· TOTALING· | FORMULA· TOTALING | FORMULA· TOTALING | (C+D)/(TOTAL(TOTAL (TOTAL(C)))+TOTAL (TOTAL(TOTAL(D)))) |
| FIST PAGE | 89.1 | FIRST SECTION | 100 | 90 | 0.14 |
| SECOND PAGE | 89.1 | FIRST SECTION | 50 | 45 | 0.07 |
| TOTAL DATA PAGE | 89.1 | FIRST SECTION | 150 | 135 | —— |
| THIRD PAGE | 89.1 | SECOND SECTION | 300 | 110 | 0.30 |
| TOTAL DATA PAGE | 89.1 | SECOND SECTION | 300 | 110 | —— |
| TOTAL DATA PAGE | 89.1 | —— | 450 | 245 | —— |
| FOURTH PAGE | 89.2 | FIRST SECTION | 150 | 40 | 0.14 |
| FIFTH PAGE | 89.2 | FIRST SECTION | 30 | 55 | 0.06 |
| TOTAL DATA PAGE | 89.2 | FIRST SECTION | 180 | 95 | —— |
| TOTAL DATA PAGE | 89.2 | —— | 180 | 95 | —— |
| SIXTH PAGE | 89.3 | FIRST SECTION | 80 | 60 | 0.10 |
| TOTAL DATA PAGE | 89.3 | FIRST SECTION | 80 | 60 | —— |
| SEVENTH PAGE | 89.3 | SECOND SECTION | 160 | 120 | 0.30 |
| TOTAL DATA PAGE | 89.3 | SECOND SECTION | 160 | 120 | —— |
| TOTAL DATA PAGE | 89.3 | —— | 240 | 180 | —— |
| GRAND TOTAL DATA PAGE | —— | —— | 870 | 510 | —— |

# FIG.14

EP 0 410 452 A2

EP 0 410 452 A2

# FIG.15A

| TABLE MODE | KEY |
| INPUT MODE | KEY |
| EXECUTE | KEY |

TABLE NAME ?
—

REMARKS·SORT·MARK·CHARACTER·FORMULA·TOTALING

# FIG.15B
CHARACTER KEY

TABLE NAME ?
LIST OF TRIAL EXAMINATION STUDENT'S RECORDS_

# FIG.15C

NEXT ITEM/ REGISTER KEY

ITEM A:
—

REMARKS·SORT·MARK·CHARACTER·FORMULA·TOTALING

# FIG.15D
(CHARACTER) KEY
(MARK) KEY

ITEM A:CHARACTER·MARK
—

REMARKS·SORT·MARK·CHARACTER·FORMULA·TOTALING

# FIG.15E
CHARACTER KEY

ITEM A:CHARACTER·MARK
AREA_

REMARKS·SORT·MARK·CHARACTER·FORMULA·TOTALING

# FIG.15F

NEXT ITEM/ REGISTER KEY

ITEM B:
—

REMARKS·SORT·MARK·CHARACTER·FORMULA·TOTALING

# FIG.15G

NEXT ITEM/ REGISTER KEY

ITEM E:
—

REMARKS·SORT·MARK·CHARACTER·FORMULA·TOTALING

# FIG.15H
(FORMULA) KEY
CHARACTER KEY

ITEM E:FORMULA
GRADE_

REMARKS·SORT·MARK·CHARACTER·FORMULA·TOTALING

# FIG.15I

FORMULA SET KEY

GRADE
FORMULA: _

41

# FIG.15J

| 2 | KEY |
|---|---|

```
GRADE
FORMULA:2
```

# FIG.15K

```
NEXT ITEM/
REGISTER
```
KEY
(FORMULA) KEY
CHARACTER KEY

```
ITEM H:FORMULA
TOTAL_


REMARKS·SORT·MARK·CHARACTER·FORMULA·TOTALING
```

# FIG.15L

```
FORMULA
SET
```
KEY
CHARACTER KEY
OPERATION

```
TOTAL
FORMULA:F+G_
```

# FIG.15M

| EXECUTE | KEY |
|---|---|

CHARACTER
KEY

```
AREA ?
TOKYO_
```

# FIG.15N

```
NEXT ITEM/
REGISTER
```

| 1 | | 3 | KEY |
|---|---|---|---|

```
AREA CODE ?
1 3 _
```

# FIG.15O

```
NEXT ITEM/
REGISTER
```
KEY

```
GRADE ?
2
```

# FIG.15P (ALL ITEMS ARE INPUT)

```
NEXT ITEM/
REGISTER
```
KEY

```
TOKYO                          TOKYO HIGH
                                   SCHOOL
JIRO  YAMASHITA
GRADE                               2
```

# FIG.15Q

| ▽ | KEY |

```
JIRO  YAMASHITA
GRADE                    2
ENGLISH                 90
```

# FIG.15R

| ▽ | KEY |
| ▽ | |

```
ENGLISH                 90
MATHEMATICS             75
TOTAL                  165
```

# FIG.15S

| EXECUTE | KEY |

```
AREA ?
—
```

# FIG.15T

| ▽ | KEY |

```
AREA ?
HOKKAIDO
```

# FIG.15U

| ▽ | KEY |
| ▽ | KEY |
| ▽ | KEY |

```
AREA ?
TOKYO
```

# FIG.15V

| NEXT ITEM/ REGISTER | KEY |

```
AREA CODE ?
—
```

| ITEM DATA STORAGE AREA | ITEM | A | B | C | D | E | F | G | H |
|---|---|---|---|---|---|---|---|---|---|
| | ITEM NAME | AREA | AREA CODE | SCHOOL | NAME | GRADE | ENGLISH | MATHEMATICS | TOTAL |
| | ATTRIBUTE | CHARACTER· MARK | FORMULA· SORT· REMARKS | CHARACTER· MARK | CHARACTER· MARK | FORMULA 2 | FORMULA | FORMULA | FORMULA F+G |
| TABLE DATA STORAGE AREA | FIRST PAGE | HOKKAIDO | 1 | HOKKAI HIGH SCHOOL | GORO SHIMIZU | 2 | 80 | 55 | 135 |
| | SECOND PAGE | HOKKAIDO | 1 | HOKKAI HIGH SCHOOL | YOSHIO TAKAHASHI | 2 | 65 | 60 | 125 |
| | THIRD PAGE | HOKKAIDO | 1 | KITA HIGH SCHOOL | OSAMU MURAYAMA | 2 | 75 | 80 | 155 |
| | FOURTH PAGE | TOKYO | 13 | TOKYO HIGH SCHOOL | JIRO YAMASHITA | 2 | 90 | 75 | 165 |
| | FIFTH PAGE | TOKYO | 13 | NISHI TOKYO SCHOOL | KIYOSHI KIMURA | 2 | 60 | 80 | 140 |
| | SIXTH PAGE | TOKYO | 13 | NISHI TOKYO SCHOOL | REIKO KONDO | 2 | 95 | 60 | 155 |
| | SEVENTH PAGE | OSAKA | 26 | MINAMI OSAKA HIGH SCHOOL | SHIGEYOSHI KAWANO | 2 | 80 | 75 | 155 |

# FIG.16

EP 0 410 452 A2

**FIG.17A**

| FIRST PAGE | TOKYO | 13 | TOKYO HIGH SCHOOL | JIRO YAMASHITA | 2 | 90 | 75 | 165 |
|---|---|---|---|---|---|---|---|---|

**FIG.17B**

| FIRST PAGE | HOKKAIDO | 1 | HOKKAI HIGH SCHOOL | GORO SHIMIZU | 2 | 80 | 55 | 135 |
|---|---|---|---|---|---|---|---|---|
| SECOND PAGE | TOKYO | 13 | TOKYO HIGH SCHOOL | JIRO YAMASHITA | 2 | 90 | 75 | 165 |

**FIG.17C**

| FIRST PAGE | HOKKAIDO | 1 | HOKKAI HIGH SCHOOL | GORO SHIMIZU | 2 | 80 | 55 | 135 |
|---|---|---|---|---|---|---|---|---|
| SECOND PAGE | HOKKAIDO | 1 | KITA HIGH SCHOOL | OSAMU MURAYAMA | 2 | 75 | 80 | 155 |
| THIRD PAGE | TOKYO | 13 | TOKYO HIGH SCHOOL | JIRO YAMASHITA | 2 | 90 | 75 | 165 |

**FIG.17D**

| FIRST PAGE | HOKKAIDO | 1 | HOKKAI HIGH SCHOOL | GORO SHIMIZU | 2 | 80 | 55 | 135 |
|---|---|---|---|---|---|---|---|---|
| SECOND PAGE | HOKKAIDO | 1 | HOKKAI HIGH SCHOOL | YOSHIO TAKAHASHI | 2 | 65 | 60 | 125 |
| THIRD PAGE | HOKKAIDO | 1 | KITA HIGH SCHOOL | OSAMU MURAYAMA | 2 | 75 | 80 | 155 |
| FOURTH PAGE | TOKYO | 13 | TOKYO HIGH SCHOOL | JIRO YAMASHITA | 2 | 90 | 75 | 165 |

```
                    ┌─────────────┐
                    │   DISPLAY   │
                    │  PROCESSING │
                    └──────┬──────┘
                           │
      I1          ┌────────▼────────┐
                  │  DESIGNATE START │
                  │   ITEM ADDRESS   │
                  └────────┬────────┘
                           │
      I2          ┌────────▼─────────┐
                  │  SET ATTRIBUTE DATA │
                  │   IN ATTRIBUTE DATA │
                  │ DETERMINING SECTION │
                  └────────┬─────────┘
                           │
      I3            ◇───────────────◇   YES
                    ◇   REMARKS     ◇───────┐
                    ◇      ?        ◇       │
                    ◇───────┬───────◇       │
                            │ NO            │
      I4            ◇───────────────◇  YES  │
                    ◇     MARK      ◇───────┤
                    ◇  DESIGNATION  ◇       │
                    ◇      ?        ◇       │
                    ◇───────┬───────◇       │
                            │ NO            │
      I5          ┌─────────▼────────┐      │
                  │  SET ITEM NAME IN │      │
                  │ DISPLAY DATA MEMORY│     │
                  └─────────┬────────┘      │
                            │◄──────────────┘
      I6          ┌─────────▼────────┐
                  │  DESIGNATE DATA  │
                  │     ADDRESS      │
                  │  OF DESIGNATED   │
                  │ ITEM (TABLE DATA │
                  │  STORAGE AREA)   │
                  └─────────┬────────┘
                            │
      I7          ┌─────────▼────────┐
                  │ SET TABLE DATA OF │
                  │ DESIGNATED ITEM IN│
                  │DISPLAY DATA MEMORY│
                  └─────────┬────────┘
                            │◄──────────────┐
      I8       YES  ◇───────────────◇       │
          ┌─────────◇  IS NEXT ITEM ◇       │
          │         ◇    PRESENT    ◇       │
      I9  │         ◇      ?        ◇       │
    ┌─────▼─────┐   ◇───────┬───────◇       │
    │ DESIGNATE │           │ NO            │
    │ NEXT ITEM │   I10                     │
    │  ADDRESS  │   ┌────────▼────────┐     │
    └───────────┘   │ PERFORM DISPLAY │     │
                    │DRIVING OPERATION│     │
                    └────────┬────────┘     │
                             │              │
                      ┌──────▼──────┐       │
                      │     END     │       │
                      └─────────────┘       │
```

# FIG.18

**FIG.19A**

SEARCH | KEY

```
ITEM ?
_
```

**FIG.19B** CHARACTER KEY

```
ITEM ?
SCHOOL_
```

EXECUTE | KEY

**FIG.19C**

```
SEARCH WORD ?
_
```

**FIG.19D** CHARACTER KEY

```
SEARCH WORD ?
HOKKAI HIGH SCHOOL_
```

EXECUTE | KEY

**FIG.19E**

```
HOKKAIDO
HOKKAI HIGH SCHOOL
GORO SHIMIZU
```

TRANSFER | KEY

**FIG.19F**

```
HOKKAIDO
HOKKAI HIGH SCHOOL
YOSHIO TAKAHASHI
```

47

**SEARCH PROCESSING**

J1 — DESIGNATE SEARCH TARGET ITEM

J2 — DESIGNATE SEARCH WORD

J3 — SET SEARCH WORD IN COMPARING SECTION

J4 — DESIGNATE FIRST PAGE ADDRESS OF TABLE DATA STORAGE AREA

J5 — SET TABLE DATA OF DESIGNATED ITEM IN COMPARING SECTION

J6 — COINCIDENCE ?

JA

J7 — IS NEXT PAGE PRESENT ?

J9 — PERFORM DISPLAY PROCESSING OF DESIGNATED PAGE

J10 — KEY INPUT ?

END

J11 — KEY ?

J13 — DELETE TABLE DATA OF DESIGNATED PAGE

J12 — SET TABLE DATA OF DESIGNATED PAGE IN TRANSFER SECTION

J8 — DESIGNATE NEXT PAGE ADDRESS

JA

**FIG.20**